(19) Europäisches Patentamt / European Patent Office / Office européen des brevets

(11) **EP 2 533 431 B1**

(12) **EUROPEAN PATENT SPECIFICATION**

(45) Date of publication and mention of the grant of the patent:
**29.10.2014 Bulletin 2014/44**

(51) Int Cl.:
***H04B 7/02*** *(2006.01)*

(21) Application number: **11305734.3**

(22) Date of filing: **10.06.2011**

(54) **Method for receiving uplink radio frequency signals in a radio communication system, master unit and slave unit thereof**

Verfahren zu Empfang von Uplink-Hochfrequenzsignalen in einem Funkkommunikationssystem, Maser-Einheit und Slave-Einheit dafür

Procédé de réception de signaux de fréquence radio en liaison montante dans un système de communication radio, unité maître et unité esclave correspondantes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.12.2012 Bulletin 2012/50**

(73) Proprietor: **ALCATEL LUCENT**
**92100 Boulogne-Billancourt (FR)**

(72) Inventors:
• **Doetsch Uwe**
**74392 Freudental (DE)**

• **Doll, Mark**
**70469 Stuttgart (DE)**
• **Schreiber, Gerhard**
**70825 Korntal-Münchingen (DE)**

(74) Representative: **Wetzel, Emmanuelle et al**
**Alcatel-Lucent Deutschland AG**
**Intellectual Property & Corporate Standards**
**Lorenzstrasse 10**
**70435 Stuttgart (DE)**

(56) References cited:
**EP-A1- 2 246 992      WO-A1-96/18277**
**WO-A1-2010/034528      WO-A1-2010/124726**
**GB-A- 2 337 416      US-A1- 2010 067 604**

**Description**

**FIELD OF THE INVENTION**

The invention relates to wireless communications and, more particularly but not exclusively, to cooperative multipoint reception in a radio communication system.

**BACKGROUND**

Current cellular mobile communication systems, like the 3GPP LTE system (LTE = Long-Term Evolution), rely on MIMO antenna techniques (MIMO = Multiple Input Multiple Output) in order to achieve high spectral efficiency. Furthermore, a frequency re-use of one is often applied to make full use of the available scarce system bandwidth. This leads to a strong imbalance of achievable user rates throughout the cell. Additionally, the inter-cell interference becomes the dominating limit for cellular system performance. Techniques like CoMP (CoMP = Coordinated multi-point) deal with this problem. In CoMP several distributed antenna arrays belonging to a same base station or to different base stations are grouped to form a so-called cooperation cluster of an extended coverage area with an overlap of several radio cells. The cooperation cluster allows for a simultaneous downlink transmission from the distributed antenna arrays to a mobile station or for a simultaneous uplink reception at the antenna arrays for radio frequency signals transmitted in an uplink direction from the mobile station. This allows forming distributed MIMO systems over the entire cooperation cluster, which is also referred to as network MIMO.

Receiving uplink radio frequency signals of two or more antenna arrays from a mobile station, forwarding the received uplink radio frequency signals from one or more slave units associated with the two or more antenna arrays to a master unit and performing a superposition of the uplink radio frequency signals at the master unit may improve an overall system performance of the radio communication system because of an increased SINR (SINR = Signal to Interference-plus-Noise Ratio) in comparison to receiving the uplink radio frequency signals via a single antenna array and recovering the data from the single received uplink radio frequency signals.

GB 2 337 416 A discloses an assessment method for a communication path from a base transceiver station to a base station controller according to one or more predetermined characteristics and based on this assessment, the base transceiver station is prevented from transferring a received uplink signal to the base station controller.

WO 96/18277 A1 describes a digital cellular mobile radio communication system with a set of base stations and a mobile switching centre. Each base station contains means for determining a quality measure as a representative of a reliability of a received information block and the mobile switching centre contains decision means for choosing the received information block with the best quality measure as a common output information block of the set of base stations.

WO 2010/034528 A1 discloses an uplink cooperation method between a serving access node and a supporting access node with respect to a terminal. The serving access node requests information relating to a signal received from the terminal at the supporting access node. The supporting access node obtains the requested information from the received signal and sends a response including the information to the serving access node. The serving access node determines an optimized signal on the basis of the information received from the supporting access node and on the basis of corresponding information relating to a further signal received from the terminal at the serving access node.

EP 2 246 992 A1 discloses a method for uplink transmission of data from a user terminal. The data are received by base stations on a wireless interface. At least one of the base stations determines a quality of the received data on at least one processing level. The at least one of the base stations further determines a respective dedicated processing level of the data that will be used for sending or not sending the data to a coordinating device based on the quality.

WO 2010/124726 A1 describes cooperative signal communication between a mobile terminal and a plurality of access nodes. Cooperation signals, e.g. received signal or signals to be transmitted, are communicated with the access nodes. The cooperation signals are quantized according to a quantization parameter for example depended on an SINR level of the received signal.

**SUMMARY**

The way of processing uplink radio frequency signals received by a radio communication systems effects bandwidths of transmission links between network nodes of the radio communication system, effects time delays for data handling of uplink data and effects processing capacities at the network nodes of the radio communication system.

It is an object of the invention to reduce CAPEX (CAPEX = CAPital EXpenditure) such as installation costs and OPEX (OPEX = Operational expenditure) such as energy consumption for operating a radio communication system.

The object is achieved by a method for receiving uplink radio frequency signals in a radio communication system, wherein the radio communication system comprises at least two antenna systems of a cooperative cluster for a multipoint reception of the uplink radio frequency signals, a first slave unit connected to a first one of the at least two antenna systems, and a master unit controlling the first slave unit, and wherein the method comprises the steps of receiving at the first one of at least two antenna systems the uplink radio frequency signals, verifying at the first slave unit, whether a characteristic parameter of the received uplink radio frequency signals fulfills a predefined criterion and controlling at the first slave unit a forwarding of the received uplink radio frequency signals to the master unit depending on a fulfillment of the predefined criterion, wherein the characteristic parameter is a service type of the received uplink radio frequency signals, wherein the service type is assigned to a delay class, and wherein the predefined criterion is a predefined delay class for the first slave unit for a transmission time delay of the uplink radio frequency signals from a mobile station via the first slave unit to the master unit. The object is further achieved by a master unit for use in a radio communication system, by a first slave unit for use in a radio communication system, by a radio network controller comprising the master unit, by a base station comprising the master unit and/or the first slave unit and by a remote radio head comprising the first slave unit. The master unit may be for example a master unit of a cooperative cluster of several antenna systems performing a multipoint reception such as applied in CoMP or the master unit may be located in a base station controlling for example a single slave unit located for example in a remote radio head or in an active antenna array.

The method offers a first benefit of requiring less transmission capacity on transmission links between the master unit and the one or several slave units. This means, that the radio communication system may be planned and installed with smaller transmission capacity on transmission links between the master unit and the one or several slave units than without the invention and thereby reduces the installation costs.

The method offers a second benefit of reacting to short-term changes such as fast fading on a transmission channel from a mobile station to the at least one antenna system and avoiding a transmission of radio frequency signals from the one or several slave units of a so-called cooperation cluster to the master unit of the cooperation cluster, which may not improve significantly a reception quality of the radio frequency signals or which may arrive too late in case of time-sensitive services such as interactive gaming or VoIP (VoIP= Voice over Internet Protocol). Thereby, transmission power for forwarding the received uplink radio frequency signals to the master unit and processing power for processing the forwarded received uplink radio frequency signals can be reduced. Most benefit can be realized in particular for data-intensive services such as video conferencing or video upload requested by a user of the mobile station.

The verifying step may be done for an overall signal received at two or more antenna elements of the at least one antenna system or the verifying step may be done separately for each antenna element of the at least one antenna system receiving the uplink radio frequency signals such as in a case of an active antenna array.

The predefined criterion may depend on one or several of the following parameters such as a transport format of the uplink radio frequency signals on a radio link from the mobile station to the at least one antenna system, and/or unused transmission resources on a connection from the first slave unit to the master unit, and/or required transmission resources on the connection from the first slave unit to the master unit for the uplink radio frequency signals, and/or quality of a channel estimation algorithm performed at the first slave unit, and/or a location of a mobile station transmitting the uplink radio frequency signals within a coverage area of the at least one antenna system, and/or velocity of the mobile station transmitting the uplink radio frequency signals.

In a preferred embodiment, the method further comprises the steps of determining at the master unit the predefined criterion for the characteristic parameter, transmitting from the master unit to the first slave unit information of the predefined criterion, and verifying at the first slave unit, whether the characteristic parameter fulfills the predefined criterion.

The preferred embodiment provides a benefit of centrally controlling within the cooperation cluster, which radio frequency signals should be superimposed at the master unit and therefore should be transmitted from the one or several slave units to the master unit.

In a further preferred embodiment, the determining step is based on a prediction of the predefined criterion before the uplink radio frequency signals are forwarded to the master unit or before the uplink radio frequency signals are received from a second one of the at least one antenna system assigned to the master unit. The further preferred embodiment provides a benefit of configuring the predefined criterion at the one or several slave units in advance before any radio frequency signals of the mobile station are transmitted from the mobile station to the cooperation cluster. The prediction of the predefined criterion may based for example on long-term measurements providing indications for average path losses between a specific location of the mobile station end the two or more antenna system of the cooperation cluster and affected for example by long-term impacts such as reflections incurred by obstacles on a transmission path of the uplink radio frequency signals between the mobile station and the antenna arrays of the cooperation cluster. The obstacles may be for buildings, tunnels, hills, etc.

In an even further preferred embodiment, a second one of the at least one antenna system is connected to a network node comprising the master unit and the method further comprises the steps of determining at the master unit an offset value of the predefined criterion, receiving al the master unit the uplink radio frequency signals via the second one of the at least one antenna system, determining at the master unit a value of the characteristic parameter of the uplink radio frequency signals received via the second one of the at least one antenna system, and the predefined criterion is determined based on the value of the characteristic parameter and based on the predefined offset value.

This allows determining the predefined criterion more suitable to a current condition of the multipoint reception by taking into account a current reception quality of the first one of the uplink radio frequency signals which have been directly received at the master unit via the second one of the at least one antenna system connected to the network node comprising the master unit and without a reception of uplink radio frequency signals at the master unit forwarded from the slave unit. Thereby, in a best case, the reception quality of the first one of the uplink radio frequency signals is already sufficient to recover information elements of the received uplink radio frequency signals such as user data bits of the series error-free and a forwarding of further uplink radio frequency signals from the one or several slave units to the master unit is not required.

In a further alternative embodiment, a second one of the at least one antenna system is connected to a network node comprising the master unit and the method further comprises the steps of determining at the master unit and at the first slave unit an offset value of the predefined criterion, receiving at the master unit the uplink radio frequency signals via the second one of the at least one antenna system, determining at the master unit a value of the characteristic parameter of the uplink radio frequency signals received via the second one of the at least one antenna system, transmitting the value of the characteristic parameter from the master unit to the first slave unit, and determining at the first slave unit the predefined criterion based on the value of the characteristic parameter and based on the predefined offset value. The further alternative embodiment is similar to the above mentioned embodiment with the difference, that not the predefined criterion is transmitted from the master unit to the first slave unit but the value of the characteristic parameter determined at the master unit and that the first slave unit determines the predefined criterion based on the offset value configured at the first slave unit and based on the value of the characteristic parameter determined at the master unit and received from the master unit.

According to the invention, the characteristic parameter is a service type of the received uplink radio frequency signals, the predefined criterion is a predefined delay class of the received uplink radio frequency signals and the predefined delay class depends on a transmission time delay of the uplink frequency signals from a mobile station via the first slave unit to the master unit. The first alternative embodiment allows blocking for a delay sensitive service such as a video conference those uplink radio frequency signals at the slave units, which would arrive too late at the master unit for a superposition with other uplink radio frequency signals directly received at the master unit or at other slave units with a smaller transmission time delay. A transmission time from the mobile station via the slave unit to the master unit may depend on a length of a transmission path from the slave unit to the master unit or on a remaining processing capacity at the slave unit for processing and forwarding the received uplink radio frequency signals.

In a second alternative example, the characteristic parameter is a reception quality of the received uplink radio frequency signals and the predefined criterion is a predefined reception signal quality. Preferably, the predefined reception signal quality is a signal-to-interference and noise ratio threshold value, a signal-to-interference ratio threshold value, or a signal-to-noise ratio threshold value.

According to a further example, the method further comprises the steps of determining at the first slave unit the reception quality of the received uplink radio frequency signals, transmitting information of the reception quality from the first slave unit to the master unit, verifying at the master unit, whether a reception of the uplink radio frequency signals via the first slave unit is required for recovering information transmitted by the uplink radio frequency signals, and transmitting from the master unit to the first slave unit, if the reception of the uplink radio frequency signals via the first slave unit is required, a request for transmitting the received uplink radio frequency signals from the first slave unit to the master unit. The further preferred embodiment may be applied for services with less stringent time delay requirements, because at a first sub-step a measurement result of the reception quality of the received uplink, radio frequency signals is transmitted from the first slave unit to the master unit and not until a second sub-step the received uplink radio frequency signals itself are transmitted from the first slave unit to the master unit, if the master unit has requested such a transmission. Thereby, the master unit is able to control for each received uplink radio frequency signals, whether the received uplink radio frequency signals should be transmitted from the first slave unit to the master unit and should be used for a superposition at the master unit or the received uplink radio frequency signals should be discarded at the first slave unit. In addition, this allows distributing a measurement process and a decision making process for the received uplink radio frequency signals across the first slave unit and the master unit. Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows a block diagram of a radio communication network according to a first embodiment of the invention.
Figure 2 shows a block diagram of a radio communication network as background art.
Figure 3 shows a flow diagram of a method in accordance to the first or the second embodiment of the invention.

Figure 4 shows a flow diagram of a method in accordance to a further embodiment of the invention.
Figure 5 shows a flow diagram of a method in accordance to an even further embodiment of the invention.
Figure 6 shows a block diagram of a master unit according to the embodiments of the invention.
Figure 7 shows a block diagram of a slave unit according to the embodiments of the invention.

## DESCRIPTION OF THE EMBODIMENTS

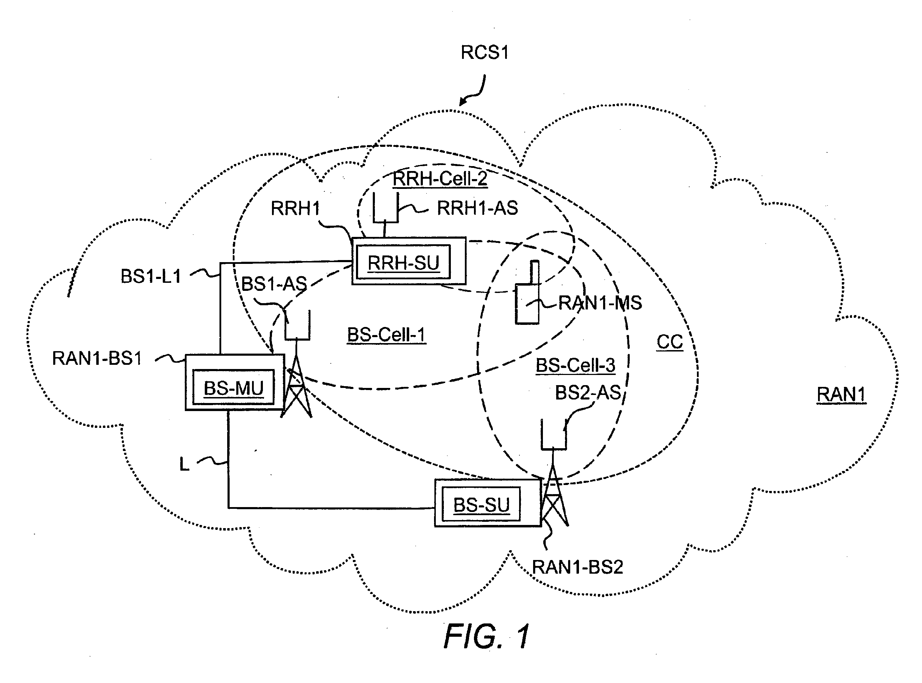

Figure 1 shows a radio communication system RCS1 comprising a radio access network RAN1 according to a first embodiment of the invention. The core network of the radio communication system RCS1 and connections of the radio communication system RCS1 to further radio communication systems, to the Internet or to fixed line communications systems are not shown for simplification.

The radio communication system RCS1 may be for example a 3GPP LTE radio communication network using OFDM (OFDM = Orthogonal Frequency Division Multiplexing). In further alternatives, the radio communication system RCS1 may for example a WiMAX radio communication network (WiMAX = Worldwide Interoperability for Microwave Access) based on the IEEE 802.16 standard family (IEEE = Institute of Electrical and Electronics Engineers), or a WLAN (WLAN = Wireless Local Area Network) based on the IEEE 802.11 standard family. The radio access network RAN1 comprises exemplarily a first base station RAN1-BS1, a second base station RAN1 -BS2 and a transmission path L between the first base station RAN1-BS1 and the second base station RAN1-BS2. The transmission path L may be for example an X2 interface such as used in 3GPP LTE.

The term "base station" may be considered synonymous to and/or referred to as a base transceiver station. Node B, enhanced Node B, access point etc, and may describe equipment that provides wireless connectivity via one or more radio links to one or more mobile stations.

Further base stations, further connections between the base stations, and connections between the base stations and network nodes of the core network are not shown for simplification.

The first base station RAN1-BS1 comprises for example a master unit BS-MU, a first remote radio head RRH1 with active elements such as a power amplifier (RRH = remote radio head), a first transmission path BS1-L1 between the first base station RAN1-BS1 and the first RRH RRH1, and a first antenna system BS1-AS located next to the first base station RAN1-BS without active elements and directly connected to the first base station RAN1-BS. Alternatively, the first base station RAN1-BS1 comprises more than one RRH and/or more than one antenna system directly connected to the first base station RAN1-BS,

The first antenna system BS1-AS may comprise for example two antenna elements. Alternatively the first antenna system BS1-AS may comprise more than two antenna elements such as four antenna elements.

The first transmission path BS1-L1 may be for example based on the CPRI standard (CPRI = Common Public Radio Interface).

The first RRH RRH1 comprises a first slave unit RRH-SU and a second antenna system RRH1-AS connected to the first slave unit RRH-SU. The second antenna system RRH1-AS may comprise for example lwo antenna elements and may be a passive antenna array or an active antenna array. Alternatively the second antenna system RRH1-AS may comprise more than two antenna elements such as four antenna elements.

The first antenna system BS1-AS provides wireless coverage for a first radio cell BS-Cell-1 and the second antenna system RRH1-AS provides Wireless coverage for a second radio cell RRH-Cell-2.

The term "radio cell" may be considered synonymous to and/or referred to as cell, radio sector, sector etc.

The second base station RAN1-BS2 comprises a second slave unit BS-SU and a third antenna system BS2-AS connected to the second slave unit BS-SU. The third antenna system BS2-AS may comprise two antenna elements and provides wireless coverage for a third radio cell BS-Cell-3. In further alternatives, the second base station RAN1-BS2 may comprise more than one antenna system and the third antenna system BS2-AS may comprise more than two antenna elements such as four antenna elements.

The first slave unit RRH-SU and the second slave unit BS-SU are controlled by the master unit BS-MU.

The first radio cell BS-Cell-1, the second radio cell RRH-Cell-2 and the third radio cell RRH-Cell-3 are configured to be parts of a cooperative cluster CC.

The term "cooperative cluster" may be considered synonymous to and/or referred to as cooperative set, cooperation set, CoMP cluster, cluster etc. and may describe two or more antenna elements of a radio communication system that cooperate for a joint reception of uplink radio frequency signals from one or more mobile stations.

Preferably, the antenna arrays respectively the radio cells belonging to the cooperative cluster CC may be selected based on distributed self-configuration algorithms executed at the base stations RAN1-BS1, RAN1-BS2 of the rodio communication system RCS1. The self-configuration algorithms may be based for example on long term measurements for pathlosses between mobile stations located within the coverage areas of the radio cells BS-Cell-1, RRH-Cell-2 and RRH-Cell-3 and the antenna systems BS1-AS, RRH1-AS and BS2-AS of the radio communication system RCS1.

In an alternative, the cooperative cluster CC may be configured by on O&M network node (O&M = Operation and Maintenance) of the radio communication system RCS1 (not shown in Figure 1 for simplification).

A mobile station RAN1-MS may be located within an overall coverage area of the cooperative cluster CC.

In an uplink direction from the mobile station RAN1-MS to the radio access network RAN1 all the radio cells or a subset of the radio cells BS-Cell-1, RRH-Cell-2, RRH-Cell-3 of the cooperative cluster CC may receive in a multipoint reception mode via an uplink MIMO transmission (MIMO = multiple input multiple output) or an uplink SIMO transmission (SIMO = single input multiple output) uplink radio frequency signals from the mobile station RAN1-MS.

The term "mobile station" may be considered synonymous to, and may hereafter be occasionally referred to, as a mobile unit, mobile user, access terminal, user equipment, subscriber, user, remote station etc. The mobile station RAN1-MS may be for example a cellular telephone, a portable computer, a pocket computer, a hand-held computer, a personal digital assistant or a car-mounted mobile device.

If for example the first slave unit RRH-SU receives uplink radio frequency signals from the mobile station RAN1-MS via the corresponding second antenna system RRH1-AS, the received uplink radio frequency signals are forwarded from the first RRH RRH1 to the first base station RAN1-BS1 via the first transmission path BS1-L1, if a characteristic parameter of the uplink radio frequency signals received at the first RRH RRH1 fulfils a predefined criterion.

In a some way, the second base station RAN1-BS2 forwards received uplink radio frequency signals to the first base station RAN1-BS1, if the characteristic parameter of the uplink radio frequency signals received at the second base station RAN1-BS2 fulfils the predefined criterion.

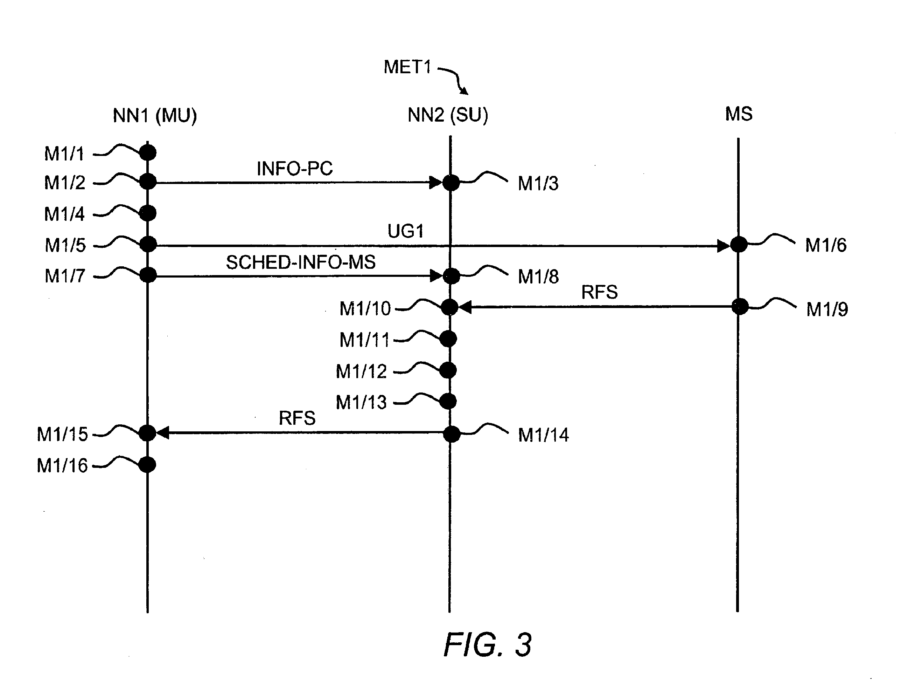

More detailed descriptions of methods of the present invention applied within the radio communication system RCS1 are given with respect to Figure 3 to Figure 5.

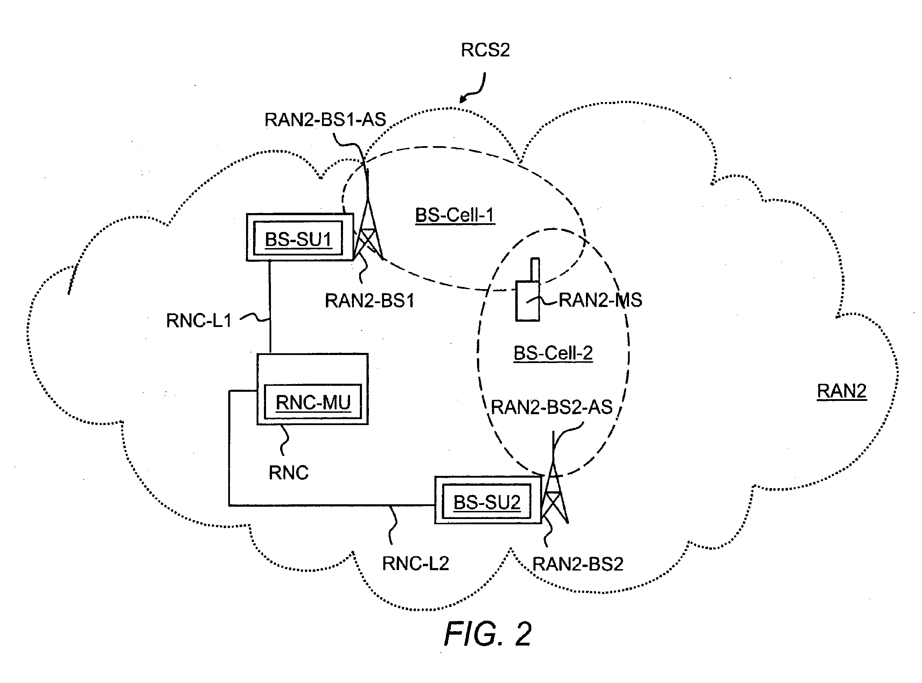

Figure 2 shows a radio communication system RCS2 comprising a radio access network RAN2 as background art being useful for understanding the invention. The core network of the radio communication system RCS2 and connections of the radio communication system RCS2 to further radio communication systems, to the Internet or to fixed line communications systems are not shown for simplification.

The radio communication system RCS2 may be for example a 3GPP UMTS radio communication network using OFDM (OFDM = Orthogonal Frequency Division Multiplexing). In a further alternative, the radio communication system RCS2 may for example a 3GPP HSUPA radio communication network (HSUPA = high speed uplink packet access).

The radio access network RAN2 comprises exemplarily a radio network controller RNC, a first base station RAN2-BS1, a first transmission path RNC-L1 between the first base station RAN2-BS1 and the radio network controller RNC, a second base station RAN2-BS2 and a second transmission path RNC-L2 between the second base station RAN2-BS2 and the radio network controller RNC.

The first transmission path RNC-L1 and the second transmission path RNC-L2 may be for example an Iub interface such as used in 3GPP UMTS.

The term "radio network controller" may be considered synonymous to and/or referred to as a base station controller, RNC, BSC etc. and may describe equipment that controls one or more base stations of a radio access network.

Further radio network controllers and further base stations of the radio access network RAN2 are not shown for simplification.

The radio network controller RNC comprises a master unit RNC-MU for controlling slave units BS-SU1, BS-SU2 of the first and the second base station RAN2-BS1, RAN2-BS2.

The first base station RAN2-BS1 comprises a first slave unit BS-SU and a first antenna system RAN2-BS1-AS connected to the first slave unit BS-SU 1. The first antenna system RAN2-BS1-AS may comprise for example one antenna element for providing wireless coverage for a first radio cell BS-Cell-1. Alternatively, the first antenna system RAN2-BS1-AS may comprise more than one antenna element and the first antenna system RAN2-BS1-AS may be a passive antenna array or an active antenna array.

In a further alternative, the first base station RAN2-BS1 may comprise more than one antenna system for providing wireless coverage to more than one radio cell,

The second base station RAN2-BS2 comprises a second slave unit BS-SU2 and a second antenna system RAN2-BS2-AS connected to the second slave unit BS-SU2. The second antenna system RAN2-BS2-AS may comprise for example one antenna element for providing wireless coverage for a second radio cell BS-Cell-2. Alternatively, the second antenna system RAN2-BS2-AS may comprise, more than one antenna element and the second antenna system RAN2-BS2-AS may be a passive antenna array or an active antenna array.

In a further alternative, the second base station RAN2-BS2 may comprise more than one antenna system for providing wireless coverage to more than one radio cell.

A mobile station RAN2-MS may be in an overlap region of the first radio cell BS-Cell-1 and the second radio cell BS-Cell-2 and may be in a so-called soft handover state such as applied in a UMTS FDD transmission mode (FDD = Frequency Division Duplex). This means, that the mobile station RAN2-MS simultaneously communicates with the first and the second base station RAN2-BS1, RAN2-BS2 and the first and the second base station PAN2-BS1, RAN2-BS2 transmit on a downlink dedicated channel same information to the mobile station RAN2-MS. In the uplink direction from the mobile station RAN2-MS to the radio access network RAN2, the first and the second base station RAN2-BS1, RAN2-BS2 receive uplink radio frequency signals from the mobile station RAN2-MS.

If the first slave unit BS-SU1 receives uplink radio frequency signals from the mobile station RAN2-MS via the corresponding first antenna system RAN2-BS1-AS, the received uplink radio frequency signals are forwarded from the first slave unit BS-SU1 to the master unit RNC-MU via the first transmission path RNC-L1, if a characteristic parameter of the received uplink radio frequency signal at the first slave unit BS-SU1 fulfils a predefined criterion. In a some way, the second slave unit BS-SU2 forwards received uplink radio frequency signals to the master unit RNC-MU, if the characteristic parameter of the received uplink radio frequency signals fulfils the predefined criterion at the second slave unit BS-SU2,

Alternaiively, if the first and the second radio cell BS-Cell-1, BS-Cell-2 may belong to a same base station, the same base station may comprise a master unit and the first and the second slave unit BS-SU1, BS-SU2 and the mobile station RAN2-MS may be in a so-called softer handover state, a similar internal predefined criterion may be applied for the characteristic parameter of received uplink radio frequency signals for forwarding the received uplink radio frequency signals from the first and the second slave unit 8S-SU1, 8S-SU2 to the master unit.

If both, the uplink radio frequency signals received at the first antenna system RAN2-BS -AS and the uplink radio frequency signals received at the second antenna system RAN2-BS2-AS do not fulfil the predefined criterion, the radio network contro!!erRNC does not receive any uplink radio frequency signals within a predefined time frame. In such a case, the radio network controller RNC may resolve such a situation by temporally lowering the predefined criterion for both, the first and the second slave unit BS-SU1, BS-SU2 for example for a short time interval such as one or several 1Tls (TTI = transmit time interval) as applied in 3GPP LTE.

A more detailed description of the method applied within the radio communication system RCS2 is given with respect to Figure 3 to Figure 5.

Referring to Figure 3 a flow diagram of a method MET1 in accordance to the first and the second embodiments of the invention is shown. The number of the steps for performing the method MET1 is not critical, and as can be understood by those skilled in the art, that the number of the steps and the order of the steps may vary without departing from the scope of the invention,

The flow diagram is shown between a first network node NN1 comprising the master unit MU, a second network node NN2 comprising the slave unit SU, and a mobile station MS. According to the first embodiment of Figure 1, the first network node NN1 may be the first base station RAN1-BS1, the master MU may be the master unit BS-MU, the second network node NN2 may be one of the first RRH RRH1 or the second base station RAN1-BS2, the slave unit SU may be one of the slave units RRH-SU, BS-SU and the mobile station MS may be the mobile station RAN1-MS. According to the second embodiment of Figure 2, the first network node NN1 may be the radio network controller RNC, the master MU may be the master unit RNC-MU, the second network node NN2 may be one of the first base station RAN2-BS1 or the second base station RAN2-BS2, the slave unit SU may be one of the slave units BS-SU1, BS-SU2 and the mobile station MS may be the mobile station RAN2-MS.

In a first step M1/1 the predefined criterion of the characteristic parameter may be determined at the master unit MU. In an alternative, the predefined criterion may be determined at the O&M network node of the radio communication system RCS1, RCS2 and may be transmitted from the O&M network node to the master unit MU.

Preferably, the characteristic parameter may be a reception quality of the received uplink radio frequency signals and the predefined criterion may be a predefined reception signal quality.

The redefined reception signal quality may be for example an SINR threshold value *SINR_threshold* given for example in dB and the reception quality of the received uplink radio frequency signals may a slave SINR measurement value *SINR_slave_measure* to be measured at a network node comprising the slave unit SU.

In a first alternative, the predefined reception signal quality may be an SIR threshold value (SIR = signal-to-interference ratio; also known as the carrier-to-interference ratio) *SIR_threshold* given for example in dB and the reception quality of the received uplink radio frequency signals may a slave SIR measurement value *SIR_slave_measure* to be measured at the network node comprising the slave unit SU.

In a second alternative, the predefined reception signal quality may be an an SNR threshold value (SNR = signal-to-noise ratio) *SNR_threshold* given for example in dB and the reception quality of the received uplink radio frequency signals may a slave SNR measurement value *SNR_slave_measure* to be measured at the network node comprising the slave unit SU.

In a third alternative, the predefined reception signal quality may be a received signal power threshold value for example in μW and the reception quality of the received uplink radio frequency signals may a signal power of the received uplink radio frequency signals to be measured of the network node comprising the slave unit SU.

A predefining algorithm for the predefined reception signal quality may use as a first input parameter a transport format to be used for the uplink radio frequency signals on a radio link from the mobile station MS to a corresponding antenna system of the stove unit SU. If for example a transport format with lower code rate is chosen by the master unit MU the predefining algorithm may determine a smaller SINR threshold value *SINR_threshold* in comparison to a case, where a transport format with higher code rate is chosen.

In addition or alternatively, the predefining algorithm may use as a second input parameter o free resources value *FRV* for example in GBH/s (GBit/s = Gigabit per second) representing unused transmission resources on a corresponding transmission path BS1-L1, BS1-L2, L, RNC-L1 RNC-L2 from the slave unit SU to the master unit MU. If for example the free resources value is *FRV* = 5 GBit/s a larger SINR threshold value *SINR_threshold* will be determined in comparison to a case, where the free resources value is *FRV* = 7 GBit/s.

In addition or alternatively, the predefining algorithm may use as a third input parameter a required resources value *RRV* for example in GBit/s (GBit/s = Gigabit per second) representing transmission resources to be required on the corresponding transmission path BS1-L1, BS1-L2, L, RNC-L1, RNC-L2 from the slave unit SU to the master unit MU for a specific service type. If for example the required resources value is *RRV* = 1GBit/s a smaller SINR threshold value *SINR_threshold* will be determined in comparison to a case, where the required resources value is *RRV* = 1.5 GBit/s.

In addition or alternatively, the predefining algorithm may use as a fourth input parameter information about a qualify of a channel estimation algorithm to be applied at the slave unit SU. Different manufactures of the slave units usually implement different proprietary channel estimation algorithms. By applying for example a learning algorithm at the master unit MU, the master unit MU may determine a condition, when all uplink radio frequency signals received from a slave unit cannot be used for recovering data contained within the uplink radio frequency signals due to the quality of the channel estimation algorithm.

In addition or alternatively, the predefining algorithm may use as a fifth input parameter information about a location of the mobile station MS within the overall coverage area of the cooperative cluster CC. If the location of the mobile station MS allows for a line-of-sight transmission of the uplink radio frequency signals RFS from the mobile station MS to the slave unit SU of the cooperative cluster a higher predefined criterion may be configured for the slave unit SU In comparison to the case with a non-line-of-sight transmission of the uplink radio frequency signals RFS from the mobile station MS to the slave unit SU.

In addition or alternatively, the predefining algorithm may use as a sixth input parameter information about a velocity of the mobile station MS within the overall coverage area of the cooperative cluster CC. If the velocity of the mobile station MS is for example ins range of a velocity of a pedestrian a higher predefined criterion may be configured for the slave unit SU in comparison to the case with a velocity in a range of a velocity of a car driving through a city.

Alternatively, the characteristic parameter may be a service type of the radio frequency signals to be received and the predefined criterion may be a predefined delay class. Each service type such as background service (e.g. file upload, email transmission), VoIP service or gaming service may be assigned a delay class, which is one of a group of delay classes. The group of delay classes may comprise for example a first delay class FAST for a transmission time delay from the mobile station MS via one of the slave units to the master unit MU below a first predefined value, a second delay class AVERAGE for the transmission time delay between the first predefined value and a second predefined value above the first predefined value and a third delay class SLOW for the transmission time delay above the second predefined value, The background service may be assigned for example the third delay class SLOW, the VoIP service may be assigned for example the second delay class MIDDLE and the gaming service may be assigned for example the first delay class FAST (see Table 1).

Table 1

| Service type | Assigned delay class |
|---|---|
| Background | SLOW |
| VoIP | MIDDLE |
| Gaming | FAST |

The predefining algorithm for predefining at the master unit MU for the slave unit SU one delay class out of the group of delay classes may use as an input parameter the transmission time delay of the uplink radio frequency signals from the mobile station MS via the slave unit SU to the master unit MU.

Exemplarily according to Figure 1, the master unit MU may predefine the first delay class FAST for the first slave unit RRH-SU because an average transmission time delay from the mobile station MS via the first slave unit RRH-SU to the master unit BS-MU is below the first predefined value and the third delay doss SLOW to the second slave unit BS-SU because an average transmission time delay from the mobile station MS via the second slave unit BS-SU to the master unit BS-MU is above the second predefined value (see Table 2). The average transmission time delay may depend on a distance between the network node comprising the slave unit and the network node comprising the master unit and may depend on a processing load at the network node comprising the slave unit for processing and forwarding the received uplink radio frequency signals to the network node comprising the master unit.

Table 2

| Slave unit | Predefined delay class |
|---|---|
| RRH-SU | FAST |
| BS-SU | SLOW |

Alternatively, the predefining algorithm may apply in addition one or several of the input parameters as given above according to the predefining algorithm for the predefined reception signal quality.

In a next step M1/2, the master unit MU transmits to the slave unit SU information INFO-PC related to the predefined criterion. Exemplarily, the master unit MU may transmit the SINR threshold value *SINR_threshold* to the slave unit SU.

In a further step M1/3, the slave unit SU receives the information INFO-PC, The steps M1/1 to M1/3 may be performed before any communication between the radio access network RAN1 and the mobile station RAN1-MS or between the radio access network RAN2 and the mobile station RAN2-MS takes place. This means, that the criterion may be predefined by a prediction using the predefining algorithm as described above, before any uplink radio frequency signals are received via the slave unit SU or are directly received at the master unit MU via an antenna system assigned and directly connected to the network node such as the base station RAN1-BS1 comprising the master unit BS-MU.

In a next step M1/4, if the master unit MU has received a mobite-ongfnated service request from the mobile station MS or a mobile-terminated service request for the mobiles station MS such as an incoming voice call (not shown in Figure 3 for simplification), the master unit MU may decide about uplink radio resources for a transmission of radio frequency signals from the mobile station MS to the cooperative cluster CC. The uplink radio resources may be for example a resource unit (two PRB: physical resource block in 3GPP LTE) of 1 ms length of time and a group of 12 adjacent frequency subcarriers such as applied in 3GPP LTE. If frequency hopping is applied, a frequency switching to a further group of 12 adjacent frequency subcarriers is applied after 0.5 us of the 1 ms length of time (after half length of time of the resource unit).

In a further step M1/5, the master unit MU transmit one uplink grant UG1 to the mobile station MS. An uplink grant comprises information such as a code rate for coding the uplink radio frequency signals at the mobile station MS, a type of modulation for modulating the uplink radio frequency signals at the mobile station MS and a set of frequency subcarriers to be used by the mobile station MS for the transmission of the uplink radio frequency signals.

In a next step M1/6, the mobile station MS receives the uplink grant UG1 from the master unit MU.

In a further step M1/7, which may be applied preferably in parallel to the step M1/5, the master unit MU transmits scheduling information SCHED-INFO-MS to the slave unit SU. The scheduling information SCHED-INFO-MS may comprise the same information as comprised in the uplink grant UG1 and may further comprise information about CAZAC (constant amplitude zero auto-correlation) sequence or so-called Zadoff-Chu sequence to be applied by the mobile station MS. The CAZAC sequence is applied to uplink pilots to be transmitted simultaneously with the uplink data within the uplink radio frequency signals from the mobile station MS to the cooperative cluster CC. The scheduling information SCHED-INFO-MS allows the slave unit SU to identify, in which frequency range the uplink frequency signals can be detected and which CAZAC sequence is applied to the uplink pilots. The scheduling information SCHED-INFO-MS may further comprise information of the assigned delay class depending on the service type of the service running at the mobile station MS.

In a next step M1/8, the slave unit SU receives the scheduling information SCHED-INFO-MS from the master unit MU.

In an alternative, the information elements of the scheduling information SCHED-INFO-MS may be added to the one or several uplink grants UG1, UG2, UG3 and the one or several uplink grants UG1, UG2, UG3 are not only forwarded by the slave unit SU to the mobile station MS but also processed at the slave unit SU in such a way, that the information elements for identifying which received radio frequency signal belongs to which mobile station are extracted and stored at the slave unit SU.

In a further alternative, the information INFO-PC related to the predefined criterion and the scheduling information SCHED-INFO-MS may be transmitted in a single message from the master unit MU to the slave unit SU.

In a next step M1/9, the mobile station MS transmits plink radio frequency signals RFS to the second network node NN2 comprising the slave unit SU. The uplink radio frequency signals comprise a data unit of several information bits, CRC bits (CRC = cyclic redundancy check) and parity bits. In a further step M1/10, the second network node NN2 comprising the slave unit SU receives the uplink radio frequency signals RFS via an assigned and connected antenna system (e.g. the first RRH RRH1 receives the uplink radio frequency signals from the mobile station RAN1-MS via the second antenna system RRH1-AS; see Figure 1).

In a next step M1/11, a receiver of the second network node NN2 comprising the slave unit SU identifies the uplink radio frequency signals RFS by using the scheduling information SCHED-INFO-Ms and may store the received uplink radio frequency signals RFS in a memory such as a memory element of an FPGA (FPGA = Field-programmable Gate Array). In a further step M1/12, which may be performed preferably in parallel to the step M1/11, a value of the characteristic parameter of the received uplink radio frequency signals RFS such as the slave SINR measurement value *SINR_slave_measure* may be determined, if the characteristic parameter is an SINR. The slave SINR measurement value *SINR_slave_measure* may be determined for example by a common channel estimation algorithm of a receiver of the first RRH RRH1 such as on MMSE receiver (MMSE = minimum mean squared error).

in a next step M1/13, the slave unit SU verifies, whether the characteristic parameter of the received uplink radio frequency signals RFS fulfils the predefined criterion.

If the predefined criterion is a predefined reception signal quality, exemplarily, the slave unit SU compares the slave SINR measurement value *SINR_slave_measure* with the SINR threshold value *SINR_theshold* provided by the master unit MU.

If the slave SINR measurement valve *SINR_slave_measure* is equal or larger than the SINR threshold value *SINR_threshold,* the method MET1 may be continued with a further step M1/9.

If the slave SINR measurement value *SINR_slave_measure* is smaller than the SINR threshold value *SINR_threshold,* the received radio frequency signals RFS are not forwarded to the master unit MU and the method MET1 may be continued by repeating the step M1/9 to M1/13 for further uplink radio frequency signals.

If the predefined criterion is the predefined delay class of the received uplink radio frequency signals the slave unit may apply for example following exemplarily look-up table 3, for the verification, whether to forward the received radio frequency signals RFS to the master unit MU or to discard the received radio frequency signals RFS at the slave unit SU.

Table 3

| Assigned delay class | Predefined delay class | Forwarding (F) or discarding (D) |
|---|---|---|
| FAST | FAST | F |
| FAST | MIDDLE | D |
| FAST | SLOW | D |
| MIDDLE | FAST | F |
| MIDDLE | MIDDLE | F |
| MIDDLE | SLOW | D |
| SLOW | FAST | F |
| SLOW | MIDDLE | F |
| SLOW | SLOW | F |

If according to a first example the assigned delay class for the service of the mobile station MS is equal to FAST and the slave unit SU has been configured a predefined delay class equal to SLOW, the slave unit SU decides to discard the received radio frequency signals RFS. If according to a second example the assigned delay class is equal to MIDDLE and the slave unit SU has been configured a predefined delay class equal to MIDDLE, the slave unit SU decides to forward the radio frequency signals RFS to the master unit MU. If according to a third example the assigned delay class is equal to SLOW and the slave unit SU has been configured a predefined delay class equal to FAST, the slave unit SU decides to forward the radio frequency signals RFS to the master unit MU.

In the further step M1/14, the slave unit SU controls a forwarding of the received uplink radio frequency signals RFS from the second network node NN2 to the first network node NN1 comprising the master unit MU depending on a fulfilment of the predefined criterion verified by the step M1/13.

If the predefined criterion is fulfilled, the received uplink radio frequency signals RFS are forwarded to the network node comprising the master unit MU and if the predefined criterion is not fulfilled, the received uplink radio frequency signals RFS are discarded at the network node comprising the slave unit SU. Thereby, the stored uplink radio frequency signals RFS may be queried from the memory.

The radio frequency signals RFS may be forwarded in a common form of I/Q samples in a frequency domain after an FFT (FFT = Fast Fourier Transformation) per antenna element. Only I/Q samples of those antenna elements will be forwarded, which fulfil the predefined criterion.

In an alternative, the radio frequency signals RFS may be forwarded in a common form of soft bits per antenna system comprising one or several antenna elements after a pre-processing of received uplink radio frequency signals at a network node comprising the antenna system for generating the soft bits.

The forwarded I/Q samples or the forwarded soft bits may comprise on information header with information identifying the I/Q samples like a range of PRB numbers, a frame and a subframe number.

In a next step M1/15, the second network NN2 comprising the master unit MU receives the forwarded uplink radio frequency signals RFS.

In a further step M1/16, an MMSE receiver of the second network node NN2 may perform a common superposition such as an MMSE combining of the forwarded uplink radio frequency signals RFS with one or several further uplink radio frequency signals obtained directly from an antenna system assigned to the master unit MU and/or obtained from a further slave unit to recover the information bits of the data unit belonging to a specific mobile station service.

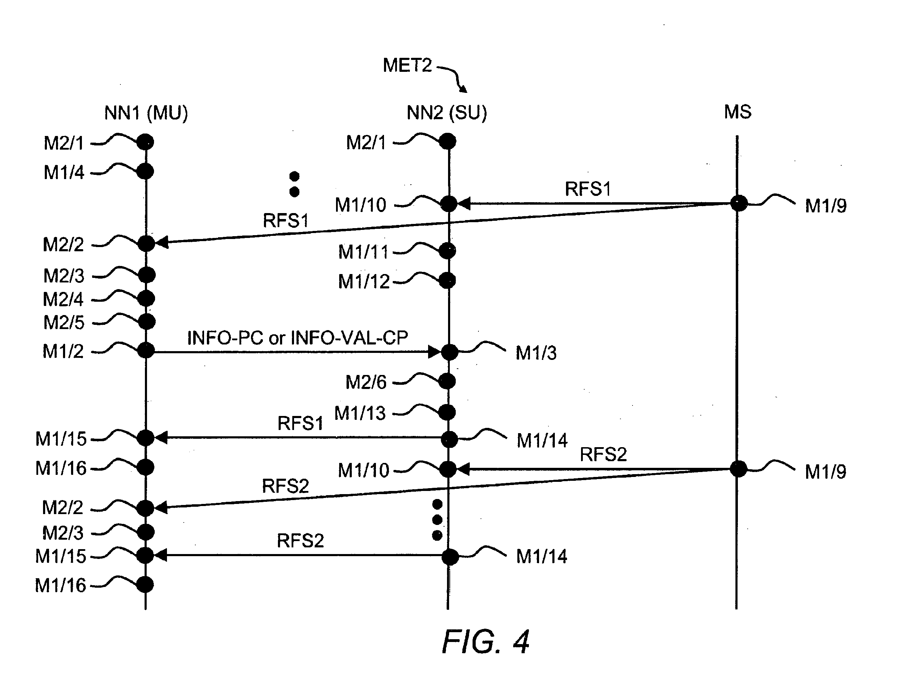

Figure 4 shows schematically a block diagram of a method MET2 for multipoint reception according to a further embodiment of the invention. The elements in Figure 4 that correspond to elements of Figure 3 have been designated by same reference numerals.

In addition to the steps M1/2 to M1/16 of the method MET1, the method MET2 may further comprises steps M2/1 to M2/7.

In a further step M2/1, an offset value of the predefined criterion may be predefined at the master unit MU and preferably also at the slave unit SU. The offset value may be individually determined for each slave unit or may be equally determined for each slave unit controlled by the master unit MU. In further alternatives, the offset value may be only predefined and configured at the master unit MU or the offset value may be only predefined at the master unit MU and may be transmitted from the master unit MU to the slave unit SU or the offset value may be predefined at the O&M network node and may be transmitted from the O&M network node to the master unit EMU and preferably also to the slave unit SU.

The offset value may be for example an SINR value *SINR_window* in dB, if the predefined criterion is the predefined reception signal quality provided by the SINR threshold value *SINR_threshold.*

The two dots in Figure 4 represent the steps M1/5 to M1/8, which are not shown in Figure 4 for simplification.

In the steps M1/9, M1/10 first uplink radio frequency signals RFS1 are transmitted from the mobile station MS to the slave unit SU and are received at the salve unit SU.

In a next step M2/2, the second network node NN2 receives the first uplink radio frequency signals RFS1 via a directly assigned and collocated antenna system (e.g. the master unit BS-MU receives the first uplink radio frequency signals RFS1 from the mobile station RAN1-MS via the first antenna system BS1-AS, which belongs to the base station RAN1-BS1; see Figure 1).

In a further step M2/3, the master unit MU preferably may store the received first uplink radio frequency signals RFS1 in a memory such as a memory element of an FPGA.

In a next step M2/4, a value of the characteristic parameter of the received first uplink radio frequency signals RFS1 such as a master SINR measurement value *SINR_master_measure* may be determined by the first network node NN1, if the characteristic parameter is an SINR. This means, that the value of the characteristic parameter is determined without any superposition of the first uplink radio frequency signals at the master unit MU by using only the uplink radio frequency signals RFS1 directly received at the first network node NN1. The value of the characteristic parameter of the received first uplink radio frequency signals RFS1 depends on a distance between the mobile station RAN1-MS and the first antenna system BS1-AS (see Figure 1) and depends on a transmission characteristic of the first uplink radio frequency signals RFS1. The transmission characteristic is for example impacted by a number of antenna elements of an antenna system of the mobile station MS and thereby impacted, whether the mobile station MS is able to transmit the first uplink radio frequency signals RFS1 in a directed or in an undirected way.

The master SINR measurement value *SINR_master_measure* may be obtained for example by a common channel estimation algorithm of a receiver of the first network node NN1 (see Figure 1) such as an MMSE receiver.

In a further optional step M2/5, the master unit MU may determine the predefined criterion such as the predefined reception signal quality provided by the SINR threshold value *SINR_threshold* by using for example following equation:

$$SINR\_threshold = SINR\_master\_measure - SINR\_window \quad (1)$$

In the step M1/2, the master unit MU transmits to the slave unit SU either the information INFO-PC of the predefined criterion such as the SINR threshold value *SINR_threshold* or information INFO-VAL-CP of the value of the characteristic parameter of the received first uplink radio frequency signals RFS1 such as the master SINR measurement value *SINR_master_measure*.

In a further step M2/6, if the slave unit SU has received the information INFO-VAL-CP of the value of the characteristic parameter of the received first uplink radio frequency signals RFS1, the slave unit SU determines the predefined criterion based on the val ue of the characteristic parameter of the received first uplink radio frequency signals RFS1 and based on the offset value configured at the slave unit SU by using for example an equation identical to the equation (1).

Then a further processing of the first uplink radio frequency signals RFS1 is performed similar to the method MET1 by the steps M1/13 to M1/16.

If by repeating the step M1/9 second uplink radio frequency signals RFS2 are transmitted from the mobile station MS to the network nodes NN1, NN2 of the slave unit SU and the master unit MU, the method MET2 may be continued according to a first alternative by receiving and storing the second uplink radio frequency signals RFS2 at the second network node NN2 comprising the slave unit SU by repeating the steps M1/10 and M1/11 and by receiving and storing the second uplink radio frequency signals RFS2 at the first network node NN1 comprising the master unit MU by repeating the steps M2/2 and M2/3. Then according to the first alternative, the slave unit SU may process the second received uplink radio frequency signals RFS2 with a same predefined criterion as applied for the first received uplink radio frequency signals RFS1 and the master unit MU may not determine a second predefined criterion to be applied for the second received uplink radio frequency signals RFS2 as shown in Figure 4. According to a second alternative embodiment (not shown in Figure 4), the steps M1/6 to M1/7 and M2/2 to M2/6 may be repeated for the second received uplink radio frequency signals RFS2. This means contrary to the first alternative embodiment, that the predefined criterion is not reused for processing the second received uplink radio frequency signals RFS2 and that the master unit MU determines a second value of the characteristic parameter of the received second uplink radio frequency signals RFS2 and that the second value of the characteristic parameter of the received second uplink radio frequency signals RFS2 or a second predefined criterion based on the second value of the characteristic parameter of the received second uplink radio frequency signals RFS2 is transmitted from the master unit MU to the slave unit SU for verifying at the slave unit SU in the repeated step M1/13, whether a second value of the characteristic parameter determined at the slave unit SU and obtained from the second uplink radio frequency signals RFS received at the slave unit SU fulfil the second predefined criterion. The second alternative embodiment allows continuously adapting the predefined criterion to a fast-varying channel quality of the radio link between the mobile station RAN 1-MS and the cooperation cluster CC (see Figure 1).

The three dots in Figure 4 represent the steps M1/11 to M1/13, which are not shown in Figure 4 for simplification.

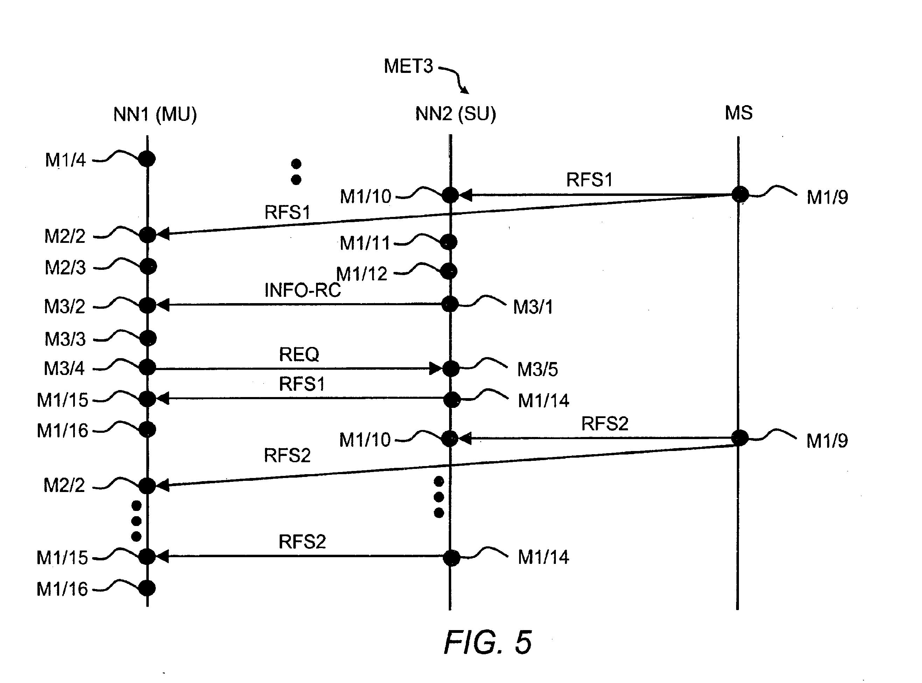

Figure 5 shows schematically a block diagram of a method MET3 for multipoint reception according to an even further embodiment of the invention. The elements in Figure 5 that correspond to elements of Figure 3 and Figure 4 have been designated by same reference numerals. In addition to the steps M1/1, M1/4 to M1/12, and M1/14 to M1/16 of the method MET1 and the steps M2/2 and M2/3 of the method MET2 the method MET3 may further comprises steps M3/1 to M3/5.

The two dots in Figure 5 represent the steps M1/5 to M1/8, which are not shown in Figure 5 for simplification.

In a further step M3/1 after the step M1/12, the slave unit SU transmits to the master unit MU information INFO-RC of the reception quality such as the value of the characteristic parameter of the uplink radio frequency signals RFS received of the slave unit SU. The information INFO-RC of the reception quality may be for example the slave SINR measurement value *SINR_slave_measure,* if the characteristic parameter is an SINR.

In a next step M3/2, the master unit MU receives the information INFO-RC of the reception quality.

In a further step M3/3, the master unit MU verifies, whether a reception of the first uplink radio frequency signals via the slave unit SU is required for recovering the information (e.g. the data block) transmitted by the first uplink radio frequency signals RFS1.

Such verification may be done for example by following sub-steps;

If a reception quality of the first uplink radio frequency signals directly received at the master unit MU and not received via one of the slave units is already sufficient for recovering error-free the information transmitted by the first uplink radio frequency signals RFS1, no superposition with further first uplink radio frequency signals received via one of the slave units is required.

If a reception quality of the first uplink radio frequency signals directly received of the master unit MU and not received via one of the slave units is not sufficient for recovering error-free the information transmitted by the first uplink radio frequency signals RFS1, the master unit MU may perform a ranking of the reception quality of the first uplink radio frequency signals RFS1 at the slave units and the master unit MU may only select one or a subset of the slave units with a highest reception quality of the ranking. The selection of one or several slave units may depend on a missing reception power to be required for recovering error-free the information transmitted by the first uplink radio frequency signals RFS1.

In the following it is assumed, that the reception quality of the slave unit SU has be selected and identified by the master unit MU as one of the highest reception qualifies of all reception qualities received from the slave units controlled by the master unit MU.

In a next step M3/4, the master unit MU transmits to the slave unit SU a request REQ for transmitting the first uplink radio frequency signals RFS1 received and stored of the slave unit SU to the master unit MU.

In a further step M3/5, the slave unit SU receives the request REQ from the master unit MU.

The method MET3 is continued with the steps M1/14 to M1/16.

All steps of the method MET3 may be repeated for every uplink radio frequency signal transmitted from the mobile station MS and received at the master unit MU and the slave unit SU such as shown in Figure 5 for the second uplink radio frequency signals RFS2.

The three dots in Figure 5 shown between the steps M2/2 and M1/15 according to the master unit MU represent the steps M2/3, M3/2, M3/3, and M3/4, which are repeated for processing the second received uplink radio frequency signals RFS2 and are not shown in Figure 5 for simplification.

The three dots in Figure 5 shown between the steps M1/10 and M1/14 according to the slave unit SU represent the steps M1/11, M1/12, which are repeated for processing the second received uplink radio frequency signals RFS2 and are not shown in Figure 5 for simplification.

With respect to all three exemplarily methods MET1, MET2, and MET3 the predefined criterion is selected dependent on an overall reception quality of the uplink radio frequency signals received from the mobile station MS and/or dependent on a service type of the service running at the mobile station MS regarding a transmission time delay for the uplink radio frequency signals. This means, that the predefined criterion may specifically selected for each mobile station transmitting the radio frequency signals and for each slave unit receiving the radio frequency signals.

The methods MET1, MET2, and MET3 may be used for a multipoint reception using several antenna systems or may be used for a single-point reception using a single antenna system. In both cases, if the charateristic parameter of the received uplink radio frequency signals does not fulfil the predefined criterion of all antenna systems for the multipoint reception or at the single antenna system for the single-point reception, the master unit will not receive any uplink radio frequency signals for recovering a data unit contained in the uplink radio frequency signals and the radio communication system may request a retransmission for the data unit by transmitting further uplink radio frequency signals containing the data unit.

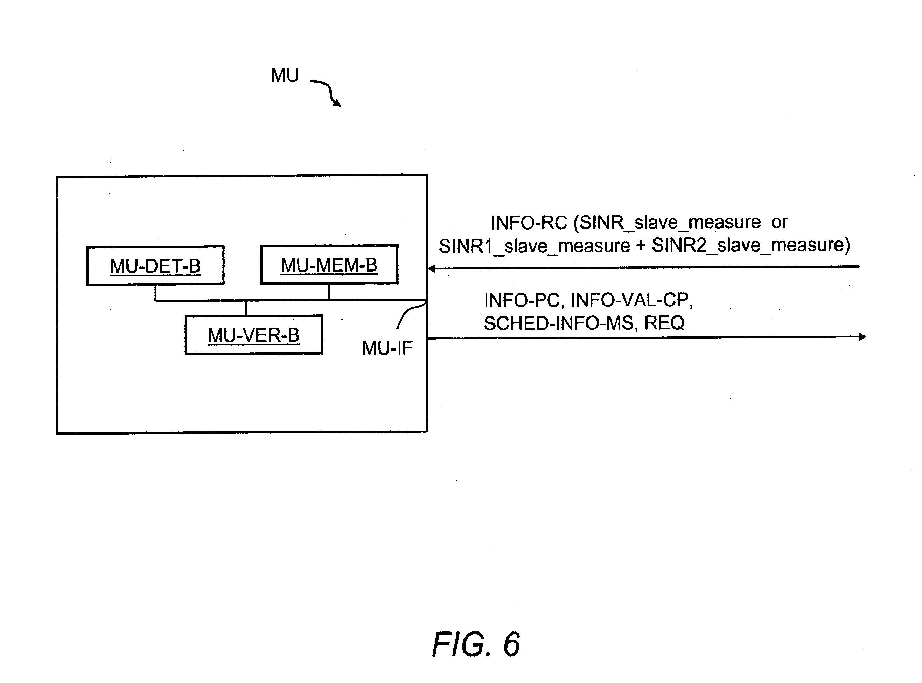

Figure 6 shows a functional block diagram of a master unit MU. The master unit MU may be part for example of a baseband processing block of a base station or of a base station interface of a radio network controller. The master unit MU may comprise a determining block MU-DET-B for determining the predefined criterion for the characteristic parameter of the uplink radio frequency signals, for determining preferably the offset value of the predefined criterion, and for determining preferably the value of the characteristic parameter of the uplink radio frequency signals, The master unit MU may further comprise an interface MU-IF for external communication for providing information INFO-PC related to the predefined criterion such, as the predefined criterion itself or the offset value of the predefined criterion, preferably the scheduling information SCHED-INFO-MS, preferably the information INFO-VAL-CP of the value of the characteristic parameter of the received first uplink radio frequency signals, and preferably the request REQ to the slave unit SU. The interface MU-IF is further used for receiving the information INFO-RC of the reception quality of the uplink radio frequency signals RFS received at the slave unit SU such as the slave SINR measurement valve $SINR\_slave\_measure$ for a passive antenna array of the slave unit SU or a first slave SINR measurement value $SINR1\_slave\_measure$ for a first antenna element of on active antenna array of the slave unit SU and a second slave SINR measurement value SINR2_slave_measure for a second antenna element of the active antenna array of the slave unit SU.

The master unit MU may further comprise a verification block MU-VER-B for verifying, whether the reception of the first uplink radio frequency signals via the slave unit SU is required for recovering the information (e.g. the data block) transmitted by the first uplink radio frequency signals RFS1. The master unit MU may further comprise a memory block MU-MEM-B for storing the predefined criterion related to the slave unit SU and related to the mobile station MS and preferably related to the service type running at the mobile-station MS, for storing preferably the offset value of the predefined criterion related to the slave unit SU and related to the mobile station MS and for storing preferably the uplink radio frequency signals directly received via an antenna system connected to the network node comprising the master unit MU.

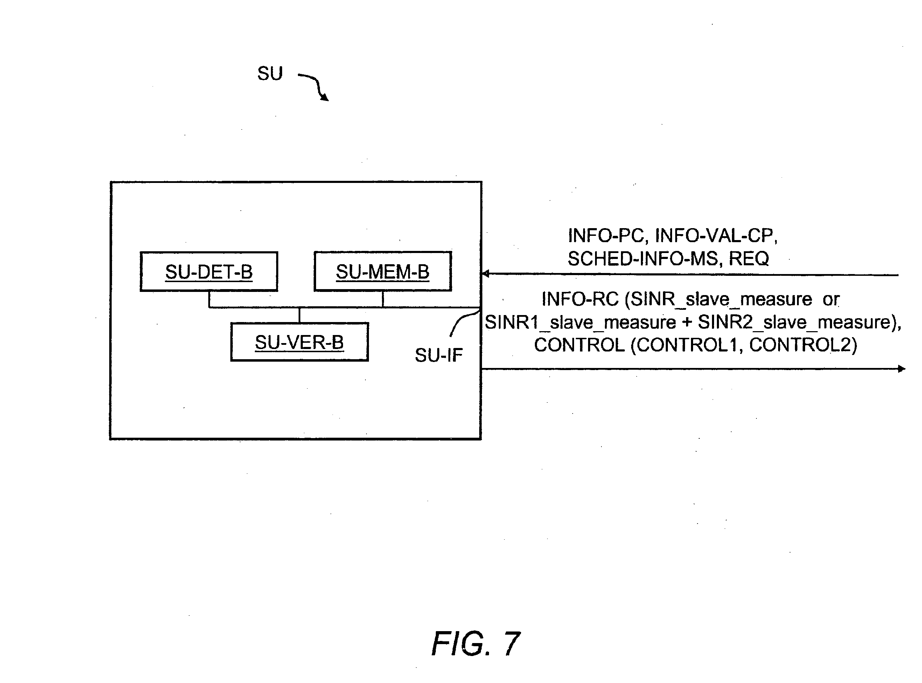

Figure 7 shows a functional block diagram of a slave unit SU. The slave unit SU may be part for example of a baseband processing block of a base station or of a baseband processing block of an RRH with base band functionalities shifted from the baseband processing block of the base station to the baseband processing block of the RRH.

The slave unit SU may comprise a verification block SU-VER-B for verifying, whether the characteristic parameter of the received uplink radio frequency signals fulfils the predefined criterion and whether the received uplink radio frequency signals shall be transmitted to the master unit MU or the received uplink radio frequency signals shall be discarded.

The slave unit SU may further comprise an interface SU-IF for external communication for controlling a forwarding of the received uplink radio frequency signals to the network node comprising the master unit MU by using a single control command COMMAND to a forwarding unit of the network node of the slave unit SU for forwarding uplink radio frequency signals received at a passive antenna system comprising one or several antenna elements or by using for example a first control command COMMAND1 for forwarding uplink radio frequency signals received at a first antenna element of an active antenna array and a second control command COMMAND2 for forwarding uplink radio frequency signals received at a second antenna element of an active antenna array and preferably for providing the information INFO-RC of the reception quality of the uplink radio frequency signals RFS received at the slave unit SU such as the slave SINR measurement value *SINR_slave_measure* for a passive antenna array of the slave unit SU or a first slave SINR measurement value *SINR1_slave_measure* for a first antenna element of an active antenna array of the slave unit SU and a second slave SINR measurement value *SINR2_slave_measure* for a second antenna element of the active antenna array of the slave unit SU.

The interface SU-IF is further used for receiving information INFO-PC related to the predefined criterion such as the predefined criterion itself or the offset value of the predefined criterion, for receiving preferably the scheduling information SCHED-INFO-MS, for receiving preferably the information INFO-VAL-CP of the value of the characteristic parameter of the received first uplink radio frequency signals, and for receiving preferably the request REQ.

The slave unit SU may further comprise a determining block SU-DET-B for determining the value of the characteristic parameter of the received uplink radio frequency signals RFS. The slave unit SU may further comprise a memory block SU-MEM-B for storing the predefined criterion related to the slave unit SU and related to the mobile station MS and preferably related to the service type running at the mobile station MS, for storing preferably the offset value of the predefined criterion related to the slave unit SU and related to the mobile station MS and for storing preferably the uplink radio frequency signals received via an antenna system assigned to the slave unit SU.

Moreover, embodiments may provide a computer program having a program code for performing parts of the steps of the above methods MET1, MET2, MET3 when the computer program is executed on a computer or processor.

A person of skill in the art would readily recognize that steps of various above-described methods MET1, MET2, MET3 can be performed by programmed computers. Herein, some embodiments are also intended to cover program storage devices, e.g., digital data storage media, which are machine or computer readable and encode machine-executabte or computer-executable programs of instructions, wherein said instructions perform some or all of the steps of said above-described methods. The program storage devices may be, e.g., digital memories, magnetic storage media such as magnetic disks and magnetic tapes, hard drives, or optimally readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may, as well be understood as a "means being adapted or suited for s.th.". A means being adapted for performing a certain function does, hence, not imply that such means necessarily is performing said function (at a given time instant).

The functions of the various elements shown in the Figures, including, any functional blocks labeled as "means", "means for receiving", "means for verifying", "means for determining", "means for transmitting, "means for performing', "means for scheduling", may be provided through the use of dedicated hardware, such as "a receiver", 'a verifier", "a determiner "a transmitter", "a performer or a processor", "a scheduler", as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method (MET1, MET2, MET3) for receiving uplink radio frequency signals (RFS, RFS1, RFS2) in a radio communication system (RCS1, RCS2), said radio communication system (RCS1, RCS2) comprises at least two antenna systems (BS1-AS, BS2-AS, RRH1-AS, RAN2-BS1-AS, RAN2-BS2-AS) of a cooperative cluster (CC) for a multipoint reception of said uplink radio frequency signals (RFS, RFS1, RFS2), a first slave unit (SU, RRH-SU, BS-SU1, BS-SU2, BS-SU) assigned to a first one of said at least two antenna systems (BS1-AS, BS2-AS, RRH1-AS, RAN2-BS1-AS, RAN2-BS2-AS), and a master unit (MU, BS-MU, RNC-MU) controlling said first slave unit (SU, RRH-SU, BS-SU1, BS-SU2, BS-SU),
said method (MET1, MET2, MET3) comprising the steps of:

   - receiving (M1/10) at said first one of said at least two antenna systems (BS1-AS, BS2-AS, RRH1-AS, RAN2-BS1-AS, RAN2-BS2-AS) said uplink radio frequency signals (RFS, RFS1, RFS2),
   - verifying (M1/13) at said first slave unit (SU, RRH-SU, BS-SU1, BS-SU2, BS-SU), whether a characteristic parameter of said received uplink radio frequency signals (RFS, RFS1, RFS2) fulfills a predefined criterion, and
   - controlling (M1/14) at said first slave unit (SU, RRH-SU, BS-SU1, BS-SU2, BS-SU) a forwarding of said received uplink radio frequency signals (RFS, RFS1, RFS2) to said master unit (MU, BS-MU, RNC-MU) depending on a fulfillment of said predefined criterion, **characterized in that** said characteristic parameter is a service type of said received uplink radio frequency signals (RFS), wherein said service type is assigned to a delay class, and wherein said predefined criterion is a predefined delay class for said first slave unit (SU, RRH-SU, BS-SU1, BS-SU2, BS-SU) for a transmission time delay of said uplink radio frequency signals (RFS) from a mobile station (MS) via said first slave unit (SU, RRH-SU, BS-SU1, BS-SU2, BS-SU) to said master unit (MU, BS-MU, RNC-MU).

2. Method (MET1, MET2, MET3) according to claim 1, wherein said verifying step is performed separately for each antenna element of said first one of said at least two antenna systems (BS1-AS, BS2-AS, RRH1-AS, RAN2-BS1-AS, RAN2-BS2-AS), if said first one of said at least two antenna systems (BS1-AS, BS2-AS, RRH1-AS, RAN2-BS1-AS, RAN2-BS2-AS) is an active antenna array or wherein said verifying step is performed once only for said first one of said at least two antenna systems (BS1-AS, BS2-AS, RRH1-AS, RAN2-BS1-AS, RAN2-BS2-AS), if said at least one antenna system (BS1-AS, BS2-AS, RRH1-AS, RAN2-BS1-AS, RAN2-BS2-AS) is a passive antenna system.

3. Method (MET1, MET2, MET3) according to any of the preceding claims, wherein said predefined delay class depends on at least one of the following:

   - transport format of said uplink radio frequency signals (RFS, RFS1, RFS2) on a radio link from a mobile station (MS) to said at least one antenna system (BS1-AS, BS2-AS, RRH1-AS, RAN2-BS1-AS, RAN2-BS2-AS),
   - unused transmission resources on a connection from said first slave unit (SU, RRH-SU, BS-SU1, BS-SU2, BS-SU) to said master unit (MU, BS-MU, RNC-MU),
   - required transmission resources on said connection from said first slave unit (SU, RRH-SU, BS-SU1, BS-SU2, BS-SU) to said master unit (MU, BS-MU, RNC-MU) for said uplink radio frequency signals,
   - quality of a channel estimation algorithm performed at said first slave unit (SU, RRH-SU, BS-SU1, BS-SU2, BS-SU),
   - location of a mobile station (RAN1-MS) transmitting said uplink radio frequency signals (RFS, RFS1, RFS2) within a coverage area of said at least one antenna system (BS1-AS, BS2-AS, RRH1-AS, RAN2-BS1-AS, RAN2-BS2-AS),
   - velocity of the mobile station (RAN1-MS) transmitting said uplink radio frequency signals (RFS, RFS1, RFS2).

4. Method (MET1, MET2) according to any of the preceding claims,
wherein said method (MET1, MET2) further comprises the steps of:

   - determining (M1/1, M2/5) at said master unit (MU, BS-MU, RNC-MU) said predefined delay class for said slave unit (SU, RRH-SU, BS-SU1, BS-SU2, BS-SU) for said transmission time delay of said uplink radio frequency signals (RFS) from said mobile station (MS) via said slave unit (SU, RRH-SU, BS-SU1, BS-SU2, BS-SU) to said master unit (MU, BS-MU, RNC-MU),
- transmitting (M1/2) from said master unit (MU, BS-MU, RNC-MU) to said at least one first slave unit (SU, RRH-SU, BS-SU1, BS-SU2, BS-SU) information of said predefined delay class.

5.  Method (MET1) according to claim 4, wherein said determining step (M1/1) is based on a prediction of said predefined delay class before said uplink radio frequency signals (RFS) are forwarded to said master unit (MU, BS-MU, RNC-MU) or before said uplink radio frequency signals (RFS) are received from a second one of said at least one antenna system (BS1-AS, BS2-AS, RRH1-AS, RAN2-BS1-AS, RAN2-BS2-AS) assigned to said master unit (MU, BS-MU, RNC-MU).

6.  A master unit (MU, BS-MU, RNC-MU) for controlling a slave unit (SU, RRH-SU, BS-SU1, BS-SU2, BS-SU) in a radio communication system (RCS1, RCS2) receiving uplink radio frequency signals (RFS, RFS1, RFS2) at a cooperative cluster (CC) of at least two antenna systems (BS1-AS, BS2-AS, RRH1-AS, RAN2-BS1-AS, RAN2-BS2-AS),
    **characterized in that** said master unit (MU, BS-MU, RNC-MU) comprising:

    - means (MU-DET-B) for determining a predefined delay class for a said slave unit (SU, RRH-SU, BS-SU1, BS-SU2, BS-SU) for a transmission time delay of said uplink radio frequency signals (RFS) from a mobile station (MS) via said slave unit (SU, RRH-SU, BS-SU1, BS-SU2, BS-SU) to said master unit (MU, BS-MU, RNC-MU) to be applied by said slave unit (SU, RRH-SU, BS-SU1, BS-SU2, BS-SU) for controlling a forwarding to said master unit (MU, BS-MU, RNC-MU) of said uplink radio frequency signals (RFS, RFS1, RFS2) received at a first one of said at least two antenna systems (BS1-AS, BS2-AS, RRH1-AS, RAN2-BS1-AS, RAN2-BS2-AS), and
    - means (MU-COM-B, MU-IF) for initiating a transmission to said slave unit (SU, RRH-SU, BS-SU1, BS-SU2, BS-SU) of information (INFO-PC) of said predefined delay class.

7.  A slave unit (SU, RRH-SU, BS-SU1, BS-SU2, BS-SU) for being controlled by a master unit (MU, BS-MU, RNC-MU) in a radio communication system (RCS1, RCS2) receiving uplink radio frequency signals (RFS, RFS1, RFS2) at a cooperative cluster (CC) of at least two antenna systems (BS1-AS, BS2-AS, RRH1-AS, RAN2-BS1-AS, RAN2-BS2-AS), said slave unit (SU, RRH-SU, BS-SU1, BS-SU2, BS-SU) comprising:

    - means (SU-VER-B) for verifying, whether a characteristic parameter of said uplink radio frequency signals (RFS, RFS1, RFS2) received at a first one of said at least two antenna systems (BS1-AS, BS2-AS, RRH1-AS, RAN2-BS1-AS, RAN2-BS2-AS) fulfills a predefined criterion, and
    - means (SU-CON-B) for controlling a forwarding of said received uplink radio frequency signals (RFS, RFS1, RFS2) to said master unit (MU, BS-MU, RNC-MU) depending on a fulfillment of said predefined criterion,

    **characterized in that** said characteristic parameter is a service type of said received uplink radio frequency signals (RFS), wherein said service type is assigned to a delay class, and wherein said predefined criterion is a predefined delay class for said first slave unit (SU, RRH-SU, BS-SU1, BS-SU2, BS-SU) for a transmission time delay of said uplink radio frequency signals (RFS) from a mobile station (MS) via said first slave unit (SU, RRH-SU, BS-SU1, BS-SU2, BS-SU) to said master unit (MU, BS-MU, RNC-MU).

8.  A radio network controller (RNC) comprising a master unit (MU, RNC-MU) according to claim 6.

9.  A base station (RAN1-BS, RAN1-BS2, RAN2-BS, RAN2-BS2) comprising at least one antenna system (BS1-AS, BS2-AS, RAN2-BS1-AS, RAN2-BS2-AS) and at least one of the following: a master unit (MU, BS-MU) according to claim 6, a slave unit (SU, BS-SU1, BS-SU2, BS-SU) according to claim 7.

10. A remote radio head (RRH1) comprising an antenna system (RRH1-AS) and a slave unit (RRH-SU) according to claim 7.


**Patentansprüche**

1.  Verfahren (MET1, MET2, MET3) zum Empfang von Uplink-Funkfrequenzsignalen (RFS, RFS1, RFS2) in einem Funkkommunikationssystem (RCS1, RCS2), wobei das besagte Funkkommunikationssystem (RCS1, RCS2) mindestens zwei Antennensysteme (BS1-AS, BS2-AS, RRH1-AS, RAN2-BS1-AS, RAN2-BS2-AS) eines kooperativen Clusters (CC) für einen Mehrpunktempfang der besagten Uplink-Funkfrequenzsignale (RFS, RFS1, RFS2), eine erste Slave-Einheit (SU, RRH-SU, BS-SU1, BS-SU2, BS-SU), welche einem ersten der besagten mindestens zwei Antennensysteme (BS1-AS, BS2-AS, RRH1-AS, RAN2-BS1-AS, RAN2-BS2-AS) zugeordnet ist, und eine Master-Einheit (MU, BS-MU, RNC-MU), welche die besagte Slave-Einheit (SU, RRH-SU, BS-SU1, BS-SU2, BS-SU) steuert, umfasst, wobei das besagte Verfahren (MET1, MET2, MET3) die folgenden Schritte umfasst:

- Empfangen (M1/10) der besagten Uplink-Funkfrequenzsignale (RFS, RFS1, RFS2) an dem besagten ersten der besagten mindestens zwei Antennensysteme (BS1-AS, BS2-AS, RRH1-AS, RAN2-BS1-AS, RAN2-BS2-AS),
- Prüfen (M1/13), an der besagten ersten Slave-Einheit (SU, RRH-SU, BS-SU1, BS-SU2, BS-SU), ob ein charakteristischer Parameter der besagten empfangenen Uplink-Funkfrequenzsignale (RFS, RFS1, RFS2) ein vordefiniertes Kriterium erfüllt, und
- Steuern (M1/14), an der besagten ersten Slave-Einheit (SU, RRH-SU, BS-SU1, BS-SU2, BS-SU), einer Weiterleitung der besagten empfangenen Uplink-Funkfrequenzsignale (RFS, RFS1, RFS2) an die besagte Master-Einheit (MU, BS-MU, RNC-MU) in Abhängigkeit von einer Erfüllung des besagten vordefinierten Kriteriums,

**dadurch gekennzeichnet, dass** der besagte charakteristische Parameter eine Dienstart der besagten empfangenen Uplink-Funkfrequenzsignale (RFS) ist, wobei die besagte Dienstart einer Verzögerungsklasse zugeordnet wird, und wobei das besagte vordefinierte Kriterium eine vordefinierte Verzögerungsklasse für die besagte erste Slave-Einheit (SU, RRH-SU, BS-SU1, BS-SU2, BS-SU) für eine Übertragungszeitverzögerung der besagten Uplink-Funkfrequenzsignale (RFS) von einer Mobilstation (MS) über die besagte erste Slave-Einheit (SU, RRH-SU, BS-SU1, BS-SU2, BS-SU) an die besagte Master-Einheit (MU, BS-MU, RNC-MU) ist.

2. Verfahren (MET1, MET2, MET3) nach Anspruch 1, wobei der besagte Schritt des Prüfens einzeln für jedes Antennenelement des besagten ersten der besagten mindestens zwei Antennensysteme (BS1-AS, BS2-AS, RRH1-AS, RAN2-BS1-AS, RAN2-BS2-AS) durchgeführt wird, wenn das besagte erste der besagten mindestens zwei Antennensysteme (BS1-AS, BS2-AS, RRH1-AS, RAN2-BS1-AS, RAN2-BS2-AS) eine aktive Antennenanordnung ist, oder wobei der besagte Schritt des Prüfens nur einmal für das besagte erste der besagten mindestens zwei Antennensysteme (BS1-AS, BS2-AS, RRH1-AS, RAN2-BS1-AS, RAN2-BS2-AS) durchgeführt wird, wenn das besagte mindestens eine Antennensystem (BS1-AS, BS2-AS, RRH1-AS, RAN2-BS1-AS, RAN2-BS2-AS) ein passives Antennensystem ist.

3. Verfahren (MET1, MET2, MET3) nach einem beliebigen der vorstehenden Ansprüche, wobei die besagte vordefinierte Verzögerungsklasse von zumindest einem der Folgenden abhängt:

- Transportformat der besagten Uplink-Funkfrequenzsignale (RFS, RFS1, RFS2) auf einem Funkverbindungsabschnitt von einer Mobilstation (MS) zu dem besagten mindestens einen Antennensystem (BS1-AS, BS2-AS, RRH1-AS, RAN2-BS1-AS, RAN2-BS2-AS),
- ungenutzte Übertragungsressourcen auf einer Verbindung von der besagten ersten Slave-Einheit (SU, RRH-SU, BS-SU1, BS-SU2, BS-SU) zu der besagten Master-Einheit (MU, BS-MU, RNC-MU),
- erforderliche Übertragungsressourcen auf der besagten Verbindung von der besagten ersten Slave-Einheit (SU, RRH-SU, BS-SU1, BS-SU2, BS-SU) zu der besagten Master-Einheit (MU, BS-MU, RNC-MU) für die besagten Uplink-Funkfrequenzsignale,
- Qualität eines an der besagten ersten Slave-Einheit (SU, RRH-SU, BS-SU1, BS-SU2, BS-SU) ausgeführten Kanalschätzungsalgorithmus,
- Standort einer Mobilstation (RAN1-MS), welche die besagten Uplink-Funkfrequenzsignale (RFS, RFS1, RFS2) innerhalb eines Abdeckungsbereichs des besagten mindestens einen Antennensystems (BS1-AS, BS2-AS, RRH1-AS, RAN2-BS1-AS, RAN2-BS2-AS) überträgt,
- Geschwindigkeit der Mobilstation (RAN1-MS), welche die besagten Uplink-Funkfrequenzsignale (RFS, RFS1, RFS2) überträgt.

4. Verfahren (MET1, MET2) nach einem beliebigen der vorstehenden Ansprüche, wobei das besagte Verfahren (MET1, MET2) weiterhin die folgenden Schritte umfasst:

- Ermitteln (M1/1, M2/5), an der besagten Master-Einheit (MU, BS-MU, RNC-MU), der besagten vordefinierten Verzögerungsklasse für die besagte erste Slave-Einheit (SU, RRH-SU, BS-SU1, BS-SU2, BS-SU) für die besagte Übertragungszeitverzögerung der besagten Uplink-Funkfrequenzsignale (RFS) von der besagten Mobilstation (MS) über die besagte Slave-Einheit (SU, RRH-SU, BS-SU1, BS-SU2, BS-SU) an die besagte Master-Einheit (MU, BS-MU, RNC-MU),

- Übertragen (M1/2), von der besagten Master-Einheit (MU, BS-MU, RNC-MU) an die besagte mindestens eine erste Slave-Einheit (SU, RRH-SU, BS-SU1, BS-SU2, BS-SU), von Informationen über die besagte vordefinierte Verzögerungsklasse.

5. Verfahren (MET1) nach Anspruch 4, wobei der besagte Schritt des Ermittelns (M1/1) auf einer Prognose der besagten vordefinierten Verzögerungsklasse vor der Weiterleitung der besagten Uplink-Funkfrequenzsignale (RFS) an die besagte Master-Einheit (MU, BS-MU, RNC-MU) oder vor dem Empfang der besagten Uplink-Funkfrequenzsignale (RFS) von einem zweiten des besagten mindestens einen der Master-Einheit (MU, BS-MU, RNC-MU) zugeordneten Antennensystems (BS1-AS, BS2-AS, RRH1-AS, RAN2-BS1-AS, RAN2-BS2-AS) basiert.

6. Master-Einheit (MU, BS-MU, RNC-MU) zur Steuerung einer Slave-Einheit (SU, RRH-SU, BS-SU1, BS-SU2, BS-SU) in einem Funkkommunikationssystem (RCS1, RCS2), welches Uplink-Funkfrequenzsignale (RFS, RFS1, RFS2) an einem kooperativen Cluster (CC) aus mindestens zwei Antennensystemen (BS1-AS, BS2-AS, RRH1-AS, RAN2-BS1-AS, RAN2-BS2-AS) empfängt,
**dadurch gekennzeichnet, dass** die besagte Master-Einheit (MU, BS-MU, RNC-MU) umfasst:

- Mittel (MU-DET-B) zum Ermitteln einer vordefinierten Verzögerungsklasse für eine besagte Slave-Einheit (SU, RRH-SU, BS-SU1, BS-SU2, BS-SU) für eine Übertragungszeitverzögerung der besagten Uplink-Funkfrequenzsignale (RFS) von einer Mobilstation (MS) über die besagte Slave-Einheit (SU, RRH-SU, BS-SU1, BS-SU2, BS-SU) an die besagte Master-Einheit (MU, BS-MU, RNC-MU), welche von der besagten Slave-Einheit (SU, RRH-SU, BS-SU1, BS-SU2, BS-SU) für die Steuerung einer Weiterleitung der besagten an einem ersten der besagten mindestens zwei Antennensysteme (BS1-AS, BS2-AS, RRH1-AS, RAN2-BS1-AS, RAN2-BS2-AS) empfangenen Uplink-Funkfrequenzsignale (RFS, RFS1, RFS2) an die besagte Master-Einheit (MU, BS-MU, RNC-MU) anzuwenden ist, und
- Mittel (MU-COM-B, MU-IF) zum Initiieren einer Übertragung von Informationen (INFO-PC) über die besagte vordefinierte Verzögerungsklasse an die besagte Slave-Einheit (SU, RRH-SU, BS-SU1, BS-SU2, BS-SU).

7. Slave-Einheit (SU, RRH-SU, BS-SU1, BS-SU2, BS-SU), welche von einer Master-Einheit (MU, BS-MU, RNC-MU) in einem Funkkommunikationssystem (RCS1, RCS2), welches Uplink-Funkfrequenzsignale (RFS, RFS1, RFS2) an einem kooperativen Cluster (CC) aus mindestens zwei Antennensystemen (BS1-AS, BS2-AS, RRH1-AS, RAN2-BS1-AS, RAN2-BS2-AS) empfängt, gesteuert wird, wobei die besagte Slave-Einheit (SU, RRH-SU, BS-SU1, BS-SU2, BS-SU) umfasst:

- Mittel (SU-VER-B) zum Prüfen, ob ein charakteristischer Parameter der besagten an einem ersten der besagten mindestens zwei Antennensysteme (BS1-AS, BS2-AS, RRH1-AS, RAN2-BS1-AS, RAN2-BS2-AS) empfangenen Uplink-Funkfrequenzsignale (RFS, RFS1, RFS2) ein vordefiniertes Kriterium erfüllt, und
- Mittel (SU-CON-B) zum Steuern einer Weiterleitung der besagten empfangenen Uplink-Funkfrequenzsignale (RFS, RFS1, RFS2) an die besagte Master-Einheit (MU, BS-MU, RNC-MU) in Abhängigkeit von einer Erfüllung des besagten vordefinierten Kriteriums,

**dadurch gekennzeichnet, dass** der besagte charakteristische Parameter eine Dienstart der besagten empfangenen Uplink-Funkfrequenzsignale (RFS) ist, wobei die besagte Dienstart einer Verzögerungsklasse zugeordnet wird, und wobei das besagte vordefinierte Kriterium eine vordefinierte Verzögerungsklasse für die besagte erste Slave-Einheit (SU, RRH-SU, BS-SU1, BS-SU2, BS-SU) für eine Übertragungszeitverzögerung der besagten Uplink-Funkfrequenzsignale (RFS) von einer Mobilstation (MS) über die besagte erste Slave-Einheit (SU, RRH-SU, BS-SU1, BS-SU2, BS-SU) an die besagte Master-Einheit (MU, BS-MU, RNC-MU) ist.

8. Netzwerk-Controller (RNC), welcher eine Master-Einheit (MU, BS-MU, RNC-MU) gemäß Anspruch 6 umfasst.

9. Basisstation (RAN1-BS, RAN1-BS2, RAN2-BS, RAN2-BS2), welche mindestens ein Antennensystem (BS1-AS, BS2-AS, RAN2-BS1-AS, RAN2-BS2-AS) und mindestens eine der Folgenden umfasst: eine Master-Einheit (MU, BS-MU, RNC-MU) gemäß Anspruch 6, eine Slave-Einheit (SU, BS-SU1, BS-SU2, BS-SU) gemäß Anspruch 7.

10. Entfernt angeordneter Funkkopf (RRH1), welcher mindestens ein Antennensystem (RRH1-AS) und mindestens eine Slave-Einheit (RRH-SU) gemäß Anspruch 7 umfasst.

**Revendications**

1.  Procédé (MET1, MET2, MET3) pour recevoir des signaux de radiofréquence de liaison montante (RFS, RFS1, RFS2) dans un système de radiocommunication (RCS1, RCS2), ledit système de radiocommunication (RCS1, RCS2) comprenant au moins deux systèmes d'antenne (BS1-AS, BS2-AS, RRH1-AS, RAN2-BS1-AS, RAN2-BS2-AS) d'un groupe coopératif (CC) pour une réception multipoint desdits signaux de radiofréquence de liaison montante (RFS, RFS1, RFS2), une première unité esclave (SU, RRH-SU, BS-SU1, BS-SU2, BS-SU) assignée à un premier système parmi lesdits au moins deux systèmes d'antenne (BS1-AS, BS2-AS, RRH1-AS, RAN2-BS1-AS, RAN2-BS2-AS), et une unité maître (MU, BS-MU, RNC-MU) commandant ladite première unité esclave (SU, RRH-SU, BS-SU1, BS-SU2, BS-SU),

    ledit procédé (MET1, MET2, MET3) comprenant les étapes suivantes :

    - recevoir (M1/10), au niveau dudit premier système parmi lesdits au moins deux systèmes d'antenne (BS1-AS, BS2-AS, RRH1-AS, RAN2-BS1-AS, RAN2-BS2-AS), lesdits signaux de radiofréquence de liaison montante (RFS, RFS1, RFS2),
    - vérifier (M1/13), au niveau de ladite première unité esclave (SU, RRH-SU, BS-SU1, BS-SU2, BS-SU), si un paramètre caractéristique desdits signaux de radiofréquence de liaison montante reçus (RFS, RFS1, RFS2) satisfait un critère prédéfini, et
    - commander (M1/14), au niveau de ladite première unité esclave (SU, RRH-SU, BS-SU1, BS-SU2, BS-SU), un transfert desdits signaux de radiofréquence de liaison montante reçus (RFS, RFS1, RFS2) vers ladite unité maître (MU, BS-MU, RNC-MU) en fonction d'une satisfaction dudit critère prédéfini,

    **caractérisé en ce que** ledit paramètre caractéristique est un type de service desdits signaux de radiofréquence de liaison montante reçus (RFS), dans lequel ledit type de service est assigné à une catégorie de retard, et dans lequel ledit critère prédéfini est une catégorie de retard prédéfinie pour ladite première unité esclave (SU, RRH-SU, BS-SU1, BS-SU2, BS-SU) pour un retard de transmission desdits signaux de radiofréquence de liaison montante (RFS) entre une station mobile (MS), par l'intermédiaire de ladite première unité esclave (SU, RRH-SU, BS-SU1, BS-SU2, BS-SU), et ladite unité maître (MU, BS-MU, RNC-MU).

2.  Procédé (MET1, MET2, MET3) selon la revendication 1, dans lequel ladite étape de vérification est exécutée séparément pour chaque élément d'antenne dudit premier système parmi lesdits au moins deux systèmes d'antenne (BS1-AS, BS2-AS, RRH1-AS, RAN2-BS1-AS, RAN2-BS2-AS), si ledit premier système parmi lesdits au moins deux systèmes d'antenne (BS1-AS, BS2-AS, RRH1-AS, RAN2-BS1-AS, RAN2-BS2-AS) est un réseau d'antennes actives ou dans lequel ladite étape de vérification est exécutée une fois seulement pour ledit premier système parmi lesdits au moins deux systèmes d'antenne (BS1-AS, BS2-AS, RRH1-AS, RAN2-BS1-AS, RAN2-BS2-AS), si ledit au moins un système d'antenne (BS1-AS, BS2-AS, RRH1-AS, RAN2-BS1-AS, RAN2-BS2-AS) est un système d'antenne passif.

3.  Procédé (MET1, MET2, MET3) selon l'une quelconque des revendications précédentes, dans lequel ladite catégorie de retard prédéfinie dépend d'au moins un des éléments suivants :

    - le format de transport desdits signaux de radiofréquence de liaison montante (RFS, RFS1, RFS2) sur une liaison radio entre une station mobile (MS) et ledit au moins un système d'antenne (BS1-AS, BS2-AS, RRH1-AS, RAN2-BS1-AS, RAN2-BS2-AS),
    - les ressources de transmission inutilisées sur une connexion entre ladite première unité esclave (SU, RRH-SU, BS-SU1, BS-SU2, BS-SU) et ladite unité maître (MU, BS-MU, RNC-MU),
    - les ressources de transmission requises sur ladite connexion entre ladite première unité esclave (SU, RRH-SU, BS-SU1, BS-SU2, BS-SU) et ladite unité maître (MU, BS-MU, RNC-MU), pour lesdits signaux de radiofréquence de liaison montante,
    - la qualité d'un algorithme d'estimation de canal exécuté au niveau de ladite première unité esclave (SU, RRH-SU, BS-SU1, BS-SU2, BS-SU),
    - l'emplacement d'une station mobile (RAN1-MS) transmettant lesdits signaux de radiofréquence de liaison montante (RFS, RFS1, RFS2) dans une zone de couverture dudit au moins un système d'antenne (BS1-AS, BS2-AS, RRH1-AS, RAN2-BS1-AS, RAN2-BS2-AS),
    - la vitesse de la station mobile (RAN1-MS) transmettant lesdits signaux de radiofréquence de liaison montante (RFS, RFS1, RFS2).

4.  Procédé (MET1, MET2) selon l'une quelconque des revendications précédentes, ledit procédé (MET1, MET2) comprenant en outre les étapes suivantes :

- déterminer (M1/1, M2/5) au niveau de ladite unité maître (MU, BS-MU, RNC-MU) ladite catégorie de retard prédéfinie pour ladite unité esclave (SU, RRH-SU, BS-SU1, BS-SU2, BS-SU) pour ledit retard de transmission desdits signaux de radiofréquence de liaison montante (RFS) entre ladite station mobile (MS), par l'intermédiaire de ladite unité esclave (SU, RRH-SU, BS-SU1, BS-SU2, BS-SU), et ladite unité maître (MU, BS-MU, RNC-MU),
- transmettre (M1/2) entre ladite unité maître (MU, BS-MU, RNC-MU) et ladite au moins une première unité esclave (SU, RRH-SU, BS-SU1, BS-SU2, BS-SU) des informations de ladite catégorie de retard prédéfinie.

**5.** Procédé (MET1) selon la revendication 4, dans lequel ladite étape de détermination (M1/1) est basée sur une prévision de ladite catégorie de retard prédéfinie avant que lesdits signaux de radiofréquence de liaison montante (RFS) ne soient transférés à ladite unité maître (MU, BS-MU, RNC-MU) ou avant que lesdits signaux de radiofréquence de liaison montante (RFS) ne proviennent d'un deuxième système d'antenne desdits au moins un système d'antenne (BS1-AS, BS2-AS, RRH1-AS, RAN2-BS1-AS, RAN2-BS2-AS) assigné à ladite unité maître (MU, BS-MU, RNC-MU).

**6.** Unité maître (MU, BS-MU, RNC-MU) pour commander une unité esclave (SU, RRH-SU, BS-SU1, BS-SU2, BS-SU) dans un système de radiocommunication (RCS1, RCS2) recevant des signaux de radiofréquence de liaison montante (RFS, RFS1, RFS2) au niveau d'un groupe coopératif (CC) d'au moins deux systèmes d'antenne (BS1-AS, BS2-AS, RRH1-AS, RAN2-BS1-AS, RAN2-BS2-AS),
**caractérisée en ce que** ladite unité maître (MU, BS-MU, RNC-MU) comprend :

- des moyens (MU-DET-B) pour déterminer une catégorie de retard prédéfinie pour une unité esclave (SU, RRH-SU, BS-SU1, BS-SU2, BS-SU) pour un retard de transmission desdits signaux de radiofréquence de liaison montante (RFS) entre une station mobile (MS), par l'intermédiaire de ladite unité esclave (SU, RRH-SU, BS-SU1, BS-SU2, BS-SU), et ladite unité maître (MU, BS-MU, RNC-MU) à appliquer par ladite unité esclave (SU, RRH-SU, BS-SU1, BS-SU2, BS-SU) pour commander un transfert vers ladite unité maître (MU, BS-MU, RNC-MU) desdits signaux de radiofréquence de liaison montante (RFS, RFS1, RFS2) reçus au niveau d'un premier système parmi lesdits au moins deux systèmes d'antenne (BS1-AS, BS2-AS, RRH1-AS, RAN2-BS1-AS, RAN2-BS2-AS), et
- des moyens (MU-COM-B, MU-IF) pour initier une transmission vers ladite unité esclave (SU, RRH-SU, BS-SU1, BS-SU2, BS-SU) d'informations (INFO-PC) de ladite catégorie de retard prédéfinie.

**7.** Unité esclave (SU, RRH-SU, BS-SU1, BS-SU2, BS-SU) destinée à être commandée par une unité maître (MU, BS-MU, RNC-MU) dans un système de radiocommunication (RCS1, RCS2) recevant des signaux de radiofréquence de liaison montante (RFS, RFS1, RFS2) au niveau d'un groupe coopératif (CC) d'au moins deux systèmes d'antenne (BS1-AS, BS2-AS, RRH1-AS, RAN2-BSI-AS, RAN2-BS2-AS), ladite unité maître (SU, RRH-SU, BS-SU1, BS-SU2, BS-SU) comprenant :

- des moyens (SU-VER-B) pour vérifier, si un paramètre caractéristique desdits signaux de radiofréquence de liaison montante (RFS, RFS1, RFS2) reçus au niveau d'un premier système parmi lesdits au moins deux systèmes d'antenne (BS1-AS, BS2-AS, RRH1-AS, RAN2-BS1-AS, RAN2-BS2-AS) satisfait un critère prédéfini, et
- des moyens (SU-CON-B) pour commander un transfert desdits signaux de radiofréquence de liaison montante reçus (RFS, RFS1, RFS2) vers ladite unité maître (MU, BS-MU, RNC-MU) en fonction d'une satisfaction dudit critère prédéfini,

**caractérisé en ce que** ledit paramètre caractéristique est un type de service desdits signaux de radiofréquence de liaison montante reçus (RFS), dans lequel ledit type de service est assigné à une catégorie de retard, et dans lequel ledit critère prédéfini est une catégorie de retard prédéfinie pour ladite première unité esclave (SU, RRH-SU, BS-SU1, BS-SU2, BS-SU) pour un retard de transmission desdits signaux de radiofréquence de liaison montante (RFS) entre une station mobile (MS), par l'intermédiaire de ladite première unité esclave (SU, RRH-SU, BS-SU1, BS-SU2, BS-SU), et ladite unité maître (MU, BS-MU, RNC-MU).

**8.** Contrôleur de réseau radio (RNC) comprenant une unité maître (MU, RNC-MU) selon la revendication 6.

**9.** Station de base (RAN1-BS, RAN1-BS2, RAN2-BS, RAN2-BS2) comprenant au moins un système d'antenne (BS1-AS, BS2-AS, RAN2-BS1-AS, RAN2-BS2-AS) et au moins une des unités suivantes : une unité maître (MU, BS-MU) selon la revendication 6, une unité esclave (SU, BS-SU1, BS-SU2, BS-SU) selon la revendication 7.

10. Tête radio distante (RRH1) comprenant un système d'antenne (RRH1-AS) et une unité esclave (RRH-SU) selon la revendication 7.

RCS1

RRH-Cell-2

RRH1 — RRH1-AS

RRH-SU

BS1-L1 — BS1-AS

RAN1-MS

BS-Cell-1

RAN1-BS1 — BS-MU

BS-Cell-3

BS2-AS

CC

RAN1

L

BS-SU

RAN1-BS2

*FIG. 1*

EP 2 533 431 B1

RCS2

RAN2-BS1-AS

BS-Cell-1

BS-SU1

RAN2-BS1

RAN2-MS

RNC-L1

BS-Cell-2

RNC-MU

RAN2-BS2-AS

RAN2

RNC

BS-SU2

RNC-L2

RAN2-BS2

*FIG. 2*

EP 2 533 431 B1

*FIG. 3*

*FIG. 4*

*FIG. 5*

EP 2 533 431 B1

MU

MU-DET-B     MU-MEM-B

MU-VER-B

MU-IF

INFO-RC (SINR_slave_measure or
SINR1_slave_measure + SINR2_slave_measure)

INFO-PC, INFO-VAL-CP,
SCHED-INFO-MS, REQ

*FIG. 6*

SU

| | |
| --- | --- |
| SU-DET-B | SU-MEM-B |

SU-VER-B

SU-IF

INFO-PC, INFO-VAL-CP,
SCHED-INFO-MS, REQ

INFO-RC (SINR_slave_measure or
SINR1_slave_measure + SINR2_slave_measure),
CONTROL (CONTROL1, CONTROL2)

*FIG. 7*

EP 2 533 431 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2337416 A
- WO 9618277 A1
- WO 2010034528 A1
- EP 2246992 A1
- WO 2010124726 A1